# EUROPEAN PATENT APPLICATION

(11) **EP 4 663 987 A2**
(43) Date of publication of application: **17.12.2025**
(21) Application number: 23956220.0
(22) Date of filing: 28.11.2023
(51) Int. Cl.: F16K 17/00, F16K 11/10, F16K 35/14, F16K 37/00, F16K 15/00, G21C 15/18

(54) **SAFETY LOCK VALVE AND NUCLEAR EQUIPMENT INCLUDING SAME**

(30) Priority: 16.10.2023 KR 20230137819; 27.11.2023 KR 20230167047
(71) Applicant: Korea Atomic Energy Research Institute, Daejeon 34057 (KR)
(72) Inventor: LEE, Jong Hui, Daejeon 34057 (KR); CHANG, Cheong Bong, Daejeon 34057 (KR); KIM, Seok, Daejeon 34057 (KR); CHO, Hyun Jun, Daejeon 34057 (KR)
(74) Representative: BCKIP Part mbB
(86) International application number: PCT/KR2023/019291
(87) International publication number: WO 2025/084498

(57) **Abstract**

A safety lock valve includes: a safety lock valve body in which a first flow communication hole, a second flow communication hole, and a pressure communication hole are formed; a flow path switching portion including a switching flow path formed therein, and movably disposed inside the safety lock valve body to move between a first state in which the switching flow path is communicated with the first flow communication hole and the second flow communication hole, and a second state in which communication of the switching flow path with the first flow communication hole and the second flow communication hole is blocked; and a flow path switching elastic member configured to provide an elastic force to the flow path switching portion in a direction in which the flow path switching portion moves to the first state.

## Description

### TECHNICAL FIELD

The present disclosure relates to a safety lock valve and a nuclear equipment including the same. This study relates to the development of a high-reliability valve concept applied to an emergency core cooling system of an innovative SMR, which is a part of the energy international joint research project carried out by the Korea Atomic Energy Research Institute with the support of the Korea Institute of Energy Technology Evaluation and Planning funded by the Ministry of Trade, Industry and Energy (Government) in the year 2023 (Project Unique Number: 1415187085, Project Number: 20228540000010).

### BACKGROUND ART

In some small modular reactors, in order to achieve emergency core cooling without intervention of an operator and assistance of emergency power in the event of an accident, a natural circulation method using a main valve is adopted. The emergency core cooling of the natural circulation method using the main valve is to circulate a cooling fluid such as coolant between an inside of the reactor and an inside of a containment vessel in which the reactor is disposed, in the event of an accident.

The main valve is opened and closed by a working fluid, in which the working fluid is supplied to the main valve by the reset valve being opened, and the main valve is closed, and the working fluid is discharged from the main valve by the trip valve being opened, and the main valve is opened.

Meanwhile, a maloperation prevention valve connected to the main valve is provided such that, during normal operation of the reactor, even if the trip valve is operated by mistake by the operator, the main valve is not opened. This maloperation prevention valve causes the main valve to be closed by a pressure difference between the inside of the reactor and the inside of the containment vessel even if the trip valve is operated by mistake by the operator. In this case, since the main valve is still in a closed state, the reactor may maintain a sealed state. Among conventional maloperation prevention valves, there are those adopting a mechanical drive method, but in order to implement the valve operation mechanism, high reliability and accuracy of mechanical component elements are required.

### DETAILED DESCRIPTION OF THE DISCLOSURE

### TECHNICAL PROBLEMS

The embodiments of the present disclosure have been invented in the background as described above, and are directed to providing a safety lock valve having a relatively simple configuration and being easy to manufacture, and a nuclear equipment including the same.

### MEANS FOR SOLVING PROBLEMS

A safety lock valve according to one aspect of the present disclosure includes: a safety lock valve body in which a first flow communication hole, a second flow communication hole, and a pressure communication hole are formed; a flow path switching portion including a switching flow path formed therein, and movably disposed inside the safety lock valve body to move between a first state in which the switching flow path is communicated with the first flow communication hole and the second flow communication hole, and a second state in which communication of the switching flow path with the first flow communication hole and the second flow communication hole is blocked; and a flow path switching elastic member configured to provide an elastic force to the flow path switching portion in a direction in which the flow path switching portion moves to the first state, wherein the pressure communication hole is formed such that a fluid that pressurizes the flow path switching portion in a direction in which the flow path switching portion moves to the second state is introduced into an inside of the safety lock valve body.

A flow path switching portion movement space, in which the flow path switching portion is movably disposed, may be formed inside the safety lock valve body, and the flow path switching portion movement space may include a first pressure space communicated with the pressure communication hole and a second pressure space communicated with an outside of the safety lock valve body.

The safety lock valve body may further include: an external communication hole formed therein that communicates the outside of the safety lock valve body with the second pressure space so that a fluid flows into or out of the second pressure space when a volume of the second pressure space changes.

The safety lock valve may further include: a flow path switching bellows disposed in the flow path switching portion movement space to be connected to the safety lock valve body and the flow path switching portion, and configured to block communication between the first pressure space and the second pressure space.

The flow path switching portion may include: a flow path switching member in which the switching flow path is formed; and a movement driving member to which the flow path switching member and the flow path switching bellows are connected.

The flow path switching elastic member may be disposed between the movement driving member and the safety lock valve body on a side of the external communication hole.

The flow path switching bellows may be connected to the safety lock valve body on the side of the external communication hole such that an inside of the flow path switching bellows is communicated with the external communication hole, the flow path switching elastic member may be disposed inside the flow path switching bellows, the first pressure space may include the flow path switching portion movement space outside the flow path switching bellows, and the second pressure space may include the flow path switching portion movement space inside the flow path switching bellows.

The safety lock valve body may further include a body pressure balance flow path formed therein that communicates the first pressure space on one side of the flow path switching portion and the first pressure space on another side of the flow path switching portion with each other.

The flow path switching bellows may be connected to the safety lock valve body and the movement driving member between the movement driving member and the flow path switching member, the first pressure space may include the flow path switching portion movement space that is communicated with an inside of the flow path switching bellows and the pressure communication hole, and the second pressure space may include the flow path switching portion movement space that is communicated with an outside of the flow path switching bellows and the external communication hole.

The flow path switching member may include a first member pressure balance flow path formed therein, which communicates the first pressure space on one side of the flow path switching member and the first pressure space on another side of the flow path switching member with each other, and the movement driving member may include a second member pressure balance flow path formed therein, which communicates the second pressure space on one side of the movement driving member and the second pressure space on another side of the movement driving member with each other.

An overpressure prevention hole may be further formed in the safety lock valve body.

The overpressure prevention hole may be formed in the safety lock valve body to be communicated with the pressure communication hole.

The flow path switching portion may further include an overpressure prevention flow path formed therein, which is communicated with the overpressure prevention hole and the second flow communication hole in the second state.

A nuclear equipment according to one aspect of the present disclosure includes: a reactor; a containment vessel in which the reactor is disposed; a main valve disposed inside the containment vessel to be connected to an inside of the reactor, configured to be opened and closed such that the inside of the reactor and an inside of the containment vessel are either communicated or not communicated, and to be closed when a working fluid is supplied and to be opened when the working fluid is discharged; a reset valve configured to be opened to supply the working fluid to the main valve; a trip valve configured to be opened to discharge the working fluid from the main valve; a safety lock valve, when the reset valve is opened, allowing the working fluid to flow to the main valve, and when the trip valve is opened, allowing the working fluid to be discharged from the main valve, and configured such that the main valve does not open when the trip valve is opened while the reactor is normally operated; and a working fluid passage portion connected between two or more of the main valve, the reset valve, the trip valve, or the safety lock valve to allow the working fluid to flow, wherein the safety lock valve is configured to be switched between a first state in which the working fluid is allowed to flow to the main valve or to be discharged from the main valve, and a second state in which the flow or discharge to or from the main valve of the working fluid is not allowed.

The safety lock valve may include: a safety lock valve body in which a first flow communication hole connected to the reset valve and the trip valve, a second flow communication hole connected to the main valve, and a pressure communication hole connected to the inside of the reactor are formed; a flow path switching portion including a switching flow path formed therein, and disposed inside the safety lock valve body so as to move between the first state in which the switching flow path is communicated with the first flow communication hole and the second flow communication hole, and the second state in which the communication of the switching flow path with the first flow communication hole and the second flow communication hole is blocked; and a flow path switching elastic member configured to provide an elastic force to the flow path switching portion in a direction in which the flow path switching portion moves to the first state, and the flow path switching portion may be configured such that a force due to a pressure difference between a pressure inside the reactor and a pressure inside the containment vessel is provided to the flow path switching portion in a direction in which the flow path switching portion moves to the second state.

The nuclear equipment may further include: an overpressure prevention valve configured to be opened together with the trip valve so that the working fluid is discharged from the main valve when the pressure inside the reactor is equal to or greater than a design pressure that is higher than a normal operation pressure, which is a pressure during a normal operation of the reactor.

The nuclear equipment may further include: a safety locking auxiliary check valve configured to allow a flow of fluid in a direction from the inside of the containment vessel to the inside of the reactor when the main valve is opened, but to prevent a flow of fluid in a direction from the inside of the reactor to the inside of the containment vessel.

The safety locking auxiliary check valve may be connected to the main valve, or connected to the inside of the reactor and the main valve, or be disposed in the main valve to be connected to the inside of the reactor, or be disposed in a reactor connection pipe that connects the inside of the reactor and the main valve.

The main valve may include: a main valve body connected to the safety lock valve, and including a reactor connection flow path connected to the inside of the reactor, and a main valve opening and closing hole that is connected to the reactor connection flow path and communicated with the inside of the containment vessel; and a main valve plunger movably disposed in the main valve body to open and close the main valve opening and closing hole.

The safety locking auxiliary check valve may include: a check valve support configured such that an inside thereof is communicated with the main valve opening and closing hole, and in which a check valve opening and closing hole that is communicated with the inside of the containment vessel is formed; and a check valve opening and closing member rotatably disposed inside the check valve support to open and close the check valve opening and closing hole

The safety locking auxiliary check valve may include a containment vessel communication hole that communicates with the inside of the containment vessel to allow a flow of fluid in a direction from the inside of the reactor to the inside of the containment vessel when the check valve opening and closing hole is closed by the check valve opening and closing member.

The safety locking auxiliary check valve may include: a check valve support including a check valve opening and closing hole formed therein, and disposed in the reactor connection flow path or a reactor connection pipe that connects the inside of the reactor and the reactor connection flow path; and a check valve opening and closing member rotatably disposed in the reactor connection flow path or the reactor connection pipe to open and close the check valve opening and closing hole.

The safety locking auxiliary check valve may include: a check valve support including a check valve flow path, the check valve flow path being connected to the main valve opening and closing hole and communicated with the inside of the containment vessel, or connected to the inside of the reactor and the reactor connection flow path; a check valve opening and closing member movably disposed in the check valve support to open and close the check valve flow path; and a check valve elastic member configured to elastically support the check valve opening and closing member in a direction for closing the check valve flow path.

The check valve opening and closing member may include a containment vessel communication hole configured to communicate with the inside of the containment vessel, wherein the containment vessel communication hole may allow a flow of fluid in a direction from the inside of the reactor to the inside of the containment vessel when the check valve flow path is closed by the check valve opening and closing member.

### EFFECTS OF INVENTION

According to the embodiments of the present invention, there is an effect that a safety lock valve included in a nuclear equipment may have a relatively simple configuration and may be easy to manufacture.

### BRIEF DESCRIPTION OF THE DRAWINGS

FIG. 1 is a view illustrating a nuclear equipment according to a first embodiment of the present disclosure.
FIG. 2 is a view illustrating a safety lock valve of the nuclear equipment according to the first embodiment of the present disclosure.
FIGS. 3 and 4 are views illustrating an operation of the nuclear equipment of FIG. 1 and the safety lock valve of FIG. 2 during an initial operation of a reactor.
FIGS. 5 and 6 are views illustrating a state of the nuclear equipment of FIG. 1 and the safety lock valve of FIG. 2 during a normal operation of the reactor.
FIGS. 7 and 8 are views illustrating an operation of the nuclear equipment of FIG. 1 and the safety lock valve of FIG. 2 when a trip valve is unintentionally opened during a normal operation of the reactor.
FIGS. 9 and 10 are views illustrating an operation of the nuclear equipment of FIG. 1 and the safety lock valve of FIG. 2 during an accident of the reactor.
FIG. 11 is a view illustrating a safety lock valve of a nuclear equipment according to a second embodiment of the present disclosure.
FIG. 12 is a view illustrating a nuclear equipment according to a third embodiment of the present disclosure.
FIG. 13 is a view illustrating a safety lock valve of the nuclear equipment according to the third embodiment of the present disclosure.
FIGS. 14 and 15 are views illustrating an operation of the nuclear equipment of FIG. 12 and the safety lock valve of FIG. 13 when a trip valve is unintentionally opened during a normal operation of the reactor.
FIGS. 16 and 17 are views illustrating an operation of the nuclear equipment of FIG. 12 and the safety lock valve of FIG. 13 during overpressure of the reactor.
FIG. 18 is a view illustrating a safety lock valve of a nuclear equipment according to a fourth embodiment of the present disclosure.
FIG. 19 is a view illustrating a nuclear equipment according to a fifth embodiment of the present disclosure.
FIG. 20 is a view illustrating a nuclear equipment according to a sixth embodiment of the present disclosure.
FIGS. 21 to 23 are views illustrating embodiments of a safety locking auxiliary check valve of the nuclear equipment according to a seventh embodiment of the present disclosure, in which FIGS. 21 and 22 illustrate a case where a containment vessel communication hole is formed in a support of the safety locking auxiliary check valve, and FIG. 23 illustrates a case where the containment vessel communication hole is formed in an opening and closing member of the safety locking auxiliary check valve.
FIG. 24 is a view illustrating a nuclear equipment according to an eighth embodiment of the present disclosure.
FIGS. 25 and 26 are views illustrating a safety locking auxiliary check valve of a nuclear equipment according to a ninth embodiment of the present disclosure.

### BEST MODE FOR IMPLEMENTING THE INVENTION

Hereinafter, specific embodiments for implementing a spirit of the present disclosure will be described in detail with reference to the drawings.

In describing the embodiments of the present disclosure, the detailed descriptions of well-known functions or configurations will be omitted if it is determined that the detailed descriptions of well-known functions or configurations may unnecessarily make obscure the spirit of the present disclosure.

Further, when an element is referred to as being 'connected' to, 'supported' by, 'supplied' to, or 'transferred' to another element, it should be understood that the element may be directly connected to, supported by, supplied to, or transferred to the other element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper portion, the lower portion, upper surface, lower surface, upper side, lower side, and the side surface are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements and/or combinations thereof disclosed in the specification, and are not intended to preclude the possibility that one or more other certain features, areas, integers, steps, actions, elements and/or combinations thereof may exist or may be added.

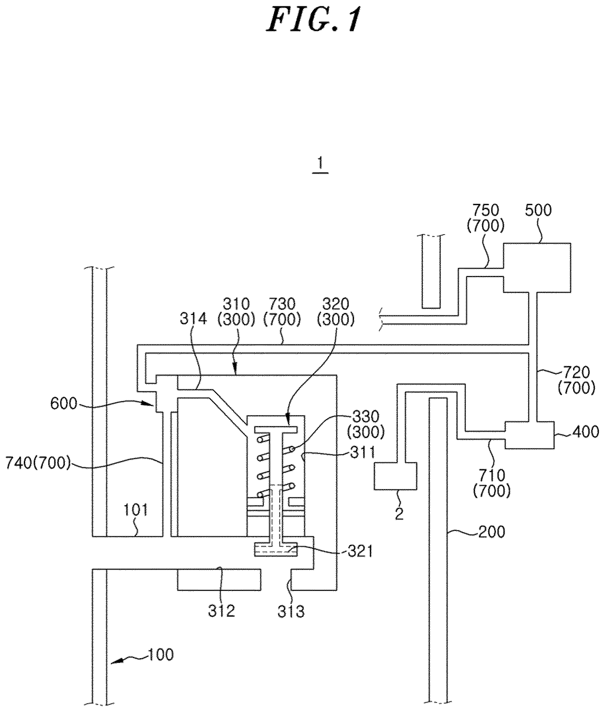

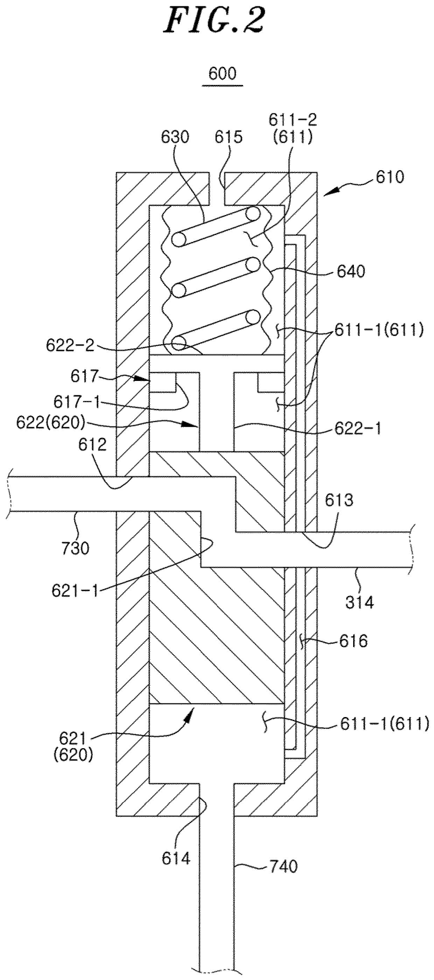

Hereinafter, with reference to FIGS. 1 to 2, a detailed configuration of a safety lock valve 600 and a nuclear equipment 1 including the same according to a first embodiment of the present disclosure will be described. In the nuclear equipment 1, in the event of an accident of a reactor 100, a cooling fluid, such as a coolant, may be naturally circulated between an inside of the reactor 100 and an inside of a containment vessel 200, so that a core (not illustrated) of the reactor 100 may be passively cooled. In addition, the nuclear equipment 1 may be configured such that, even if a trip valve 500 is unintentionally opened during a normal operation of the reactor 100, the cooling fluid, such as the coolant, may not be circulated between the inside of the reactor 100 and the inside of the containment vessel 200. The nuclear equipment 1 may include the reactor 100, the containment vessel 200, a main valve 300, a reset valve 400, the trip valve 500, the safety lock valve 600, and a working fluid passage portion 700.

In the reactor 100, nuclear fission may occur by using nuclear fuel containing radioactive material such as uranium. In addition, the reactor 100 may evaporate secondary-side water and generate steam in a steam generator (not illustrated) by using heat generated by nuclear fission. The steam may be supplied to a steam usage destination outside the reactor 100, such as a steam turbine or desalination. In the reactor 100, a reactor connection pipe 101 may be provided to connect an inside of the reactor 100 and the main valve 300.

The containment vessel 200 may prevent leakage to the outside of fission products, such as radiation, generated by nuclear fission in the reactor 100. The containment vessel 200 may surround the reactor 100. In other words, the reactor 100 may be disposed inside the containment vessel 200. The containment vessel 200 may be manufactured as an iron containment vessel.

The main valve 300 may be opened or closed such that an inside of the reactor 100 and an inside of the containment vessel 200 are communicated or not communicated. The main valve 300 may be disposed at a side and a top of the reactor 100, respectively. During a normal operation of the reactor 100, the main valve 300 may be closed, so that the inside of the reactor 100 and the inside of the containment vessel 200 may not be communicated. When an accident occurs in the reactor 100, the main valve 300, which is disposed at the side and top of the reactor 100, may be opened. By the main valve 300 that is disposed at the top of the reactor 100 being opened, a cooling fluid in a steam state inside the reactor 100 may be discharged from the reactor 100. The cooling fluid in a steam state discharged from the reactor 100 may be condensed by an inner wall of the containment vessel 200 or a passive containment vessel cooling system, and may be filled into an inside of the containment vessel 200. When a water level of the condensed cooling fluid filled in an inside of the containment vessel 200 becomes higher than a water level of the cooling fluid in an inside of the reactor 100, the cooling fluid filled in the inside of the containment vessel 200 may be introduced into the reactor 100 through a main valve 300 disposed at a side of the reactor 100, due to a hydrostatic pressure difference. In other words, when the main valves 300 disposed at a side and a top of the reactor 100 are opened, the cooling fluid may be naturally circulated between an inside of the reactor 100 and an inside of the containment vessel 200, while undergoing a phase change, and a core of the reactor 100 may be passively cooled.

The main valve 300 may be disposed in an inside of the containment vessel 200 so as to be connected to an inside of the reactor 100. In addition, the main valve 300 may be configured to be closed when a working fluid is supplied, and to be opened when the working fluid is discharged. The main valve 300 may include a main valve body 310, a main valve plunger 320, and a main valve elastic member 330.

The main valve body 310 may be connected to an inside of the reactor 100 and to the safety lock valve 600. The main valve body 310 may be connected to an inside of the reactor 100 by the reactor connection pipe 101. In addition, the main valve body 310 may be directly connected to the safety lock valve 600. In addition, the main valve body 310 may also be connected to the safety lock valve 600 by a separate working fluid flow passage (not illustrated) included in a working fluid passage portion 700.

In the main valve body 310, a plunger movement space 311, a reactor connection flow path 312, a main valve opening and closing hole 313, and a safety lock valve connection flow path 314 may be formed. In the plunger movement space 311, a main valve plunger 320 may be disposed to be movable. The reactor connection flow path 312 may be connected to an inside of the reactor 100 by the reactor connection pipe 101. In addition, the reactor connection flow path 312 may be connected to the plunger movement space 311. The main valve opening and closing hole 313 may be connected to the reactor connection flow path 312. In addition, the main valve opening and closing hole 313 may be communicated with an inside of the containment vessel 200. The main valve opening and closing hole 313 may be opened or closed by the main valve plunger 320. The safety lock valve connection flow path 314 may be connected to the plunger movement space 311 and the safety lock valve 600. The safety lock valve connection flow path 314 may be connected to a second flow communication hole 613 formed in a safety lock valve body 610 to be described below, which is included in the safety lock valve 600. The safety lock valve connection flow path 314 may be directly connected to the second flow communication hole 613. In addition, the safety lock valve connection flow path 314 may also be connected to the second flow communication hole 613 by a separate working fluid flow passage of the working fluid passage portion 700.

The main valve plunger 320 may be disposed to be movable in the main valve body 310 such that an inside of the reactor 100 and an inside of the containment vessel 200 are communicated or not communicated. The main valve plunger 320 may be disposed to be movable in the plunger movement space 311 of the main valve body 310. According to a movement position of the main valve plunger 320 in the plunger movement space 311, the main valve opening and closing hole 313 may be opened or closed by one side of the main valve plunger 320. For example, a lower portion of the main valve plunger 320 may open or close the main valve opening and closing hole 313. A main valve communication flow path 321 may be formed in the main valve plunger 320. Through the main valve communication flow path 321, the reactor connection flow path 312 and the safety lock valve connection flow path 314 may be communicated.

The main valve elastic member 330 may elastically support the main valve plunger 320. The main valve elastic member 330 may apply an elastic force to the main valve plunger 320 in a direction in which one side of the main valve plunger 320 opens the main valve opening and closing hole 313.

The reset valve 400 may be opened so that a working fluid is supplied to the main valve 300. By the reset valve 400 being opened and a working fluid being supplied to the main valve 300, the main valve 300 may be closed. The reset valve 400 may be connected to a working fluid supply source 2 by a working fluid supply passage 710 to be described below, which is included in the working fluid passage portion 700. In addition, the reset valve 400 may be connected to a first working fluid flow passage 720 to be described below, which is included in the working fluid passage portion 700. In addition, the reset valve 400 may be connected to the safety lock valve 600 through a second working fluid flow passage 730 to be described below, which is included in the working fluid passage portion 700 and connected to the first working fluid flow passage 720, and may be connected to the main valve 300 through the safety lock valve 600. In addition, the reset valve 400 may be communicated with the main valve 300 by the safety lock valve 600 being switched to a first state to be described below. Meanwhile, the working fluid may have the same physical property as a cooling fluid in an inside of the reactor 100, and the working fluid may be water, and the working fluid supply source 2 may be water stored inside or outside the containment vessel 200. In other words, the working fluid supply source 2 may be disposed inside or disposed outside the containment vessel 200. However, the working fluid supply source 2 is not particularly limited.

The reset valve 400 may be configured to be closed when electricity is not applied, and to be opened when electricity is applied. For example, the reset valve 400 may include a valve body in which an opening and closing hole is formed, a plunger that is disposed to be movable inside the valve body, an elastic member that applies an elastic force to the plunger in a direction of closing the opening and closing hole, and a solenoid that applies a driving force to the plunger in a direction of opening the opening and closing hole. In addition, when electricity is not applied to the solenoid, the plunger may be moved by the elastic force of the elastic member to close the opening and closing hole of the valve body. In addition, when electricity is applied to the solenoid, the plunger may move overcoming the elastic force of the elastic member to open the opening and closing hole of the valve body. Opening and closing of the reset valve 400 may be performed by a reset valve controller connected to the solenoid of the reset valve 400. The reset valve controller may be implemented by an arithmetic device including a microprocessor, a memory, and the like, and since the implementation method is obvious to those skilled in the art, a detailed description thereof will be omitted.

The trip valve 500 may be opened so that a working fluid is discharged from the main valve 300. By the trip valve 500 being opened and a working fluid being discharged from the main valve 300, the main valve 300 may be opened. The trip valve 500 may be connected to the first working fluid flow passage 720 of the working fluid passage portion 700. In addition, the trip valve 500 may be connected to the safety lock valve 600 through the second working fluid flow passage 730 connected to the first working fluid flow passage 720, and may be connected to the main valve 300 through the safety lock valve 600. In addition, the trip valve 500 may be communicated with the main valve 300 by the safety lock valve 600 being switched to a first state. In addition, the trip valve 500 may be connected to an inside of the containment vessel 200 by a third working fluid flow passage 750 to be described below, which is included in the working fluid passage portion 700.

The trip valve 500 may be configured to be opened when electricity is not applied, and to be closed when electricity is applied. For example, the trip valve 500 may include a valve body in which an opening and closing hole is formed, a plunger that is disposed to be movable inside the valve body, an elastic member that applies an elastic force to the plunger in a direction of opening the opening and closing hole, and a solenoid that applies a driving force to the plunger in a direction of closing the opening and closing hole. In addition, when electricity is not applied to the solenoid, the plunger may be moved by the elastic force of the elastic member to open the opening and closing hole of the valve body. In addition, when electricity is applied to the solenoid, the plunger may move overcoming the elastic force of the elastic member to close the opening and closing hole of the valve body. Opening and closing of the trip valve 500 may be performed by a trip valve controller connected to the solenoid of the trip valve 500. The trip valve controller may be implemented by an arithmetic device including a microprocessor, a memory, and the like, and since the implementation method is obvious to those skilled in the art, a detailed description thereof will be omitted.

The safety lock valve 600 may be configured to allow a working fluid to flow to the main valve 300 when the reset valve 400 is opened, to allow a working fluid to be discharged from the main valve 300 when the trip valve 500 is opened, and to prevent the main valve 300 from being opened when the trip valve 500 is opened during a normal operation of the reactor 100. In addition, the safety lock valve 600 may be configured to be switched between a first state and a second state. The first state of the safety lock valve 600 is defined as a state in which a working fluid is allowed to flow to the main valve 300 or is allowed to be discharged from the main valve 300, and the second state thereof may be defined as a state in which a working fluid is not allowed to flow to the main valve 300 or is not allowed to be discharged from the main valve 300. The first state and the second state may be referred as a communication state and a blocking state, respectively.

The safety lock valve 600 may include the safety lock valve body 610, a flow path switching portion 620, a flow path switching elastic member 630, and a flow path switching bellows 640. In addition, the safety lock valve 600 may be configured such that a force due to a difference between an internal pressure of the safety lock valve body 610, which is communicated with a pressure communication hole 614 to be described below, and an external pressure is provided to the flow path switching portion 620 in a direction in which the flow path switching portion 620 is moved to the second state. In other words, the safety lock valve 600 may be configured such that a force due to a difference between a pressure inside the reactor 100 to which the pressure communication hole 614 is connected, and a pressure inside the containment vessel 200 that is external to the safety lock valve 600, is applied to the flow path switching portion 620 in a direction in which the flow path switching portion 620 is switched to the second state.

The safety lock valve body 610 may be connected to the reset valve 400 and the trip valve 500. The safety lock valve body 610 may be connected to the reset valve 400 and the trip valve 500 through the working fluid passage portion 700. The safety lock valve body 610 may be connected to the second working fluid flow passage 730 of the working fluid passage portion 700. In addition, the safety lock valve body 610 may be connected to the reset valve 400 and the trip valve 500 through the second working fluid flow passage 730, and the first working fluid flow passage 720 that is connected to the second working fluid flow passage 730 and connected to the reset valve 400 and the trip valve 500. In addition, the safety lock valve body 610 may be connected to an inside of the reactor 100. The safety lock valve body 610 may be connected to an inside of the reactor 100 by being connected to a reactor connection passage 740 to be described later, which is included in the working fluid passage portion 700 and connected to the inside of the reactor 100. In addition, the safety lock valve body 610 may be connected to the main valve 300. The safety lock valve body 610 may be directly connected to the main valve 300. The safety lock valve body 610 may be directly connected to a main valve body 310 of the main valve 300. The safety lock valve body 610 may be directly connected to the safety lock valve connection flow path 314 of the main valve body 310. The safety lock valve body 610 may also be connected to the main valve 300 through a separate working fluid flow passage of the working fluid passage portion 700. In the safety lock valve body 610, a flow path switching portion movement space 611, a first flow communication hole 612, a second flow communication hole 613, a pressure communication hole 614, an external communication hole 615, a body pressure balance flow path 616, and a member support portion 617 may be formed.

The flow path switching portion movement space 611 may be formed inside the safety lock valve body 610 such that the flow path switching portion 620 is movably disposed. The flow path switching portion movement space 611 may include a first pressure space 611-1 and a second pressure space 611-2.

The first pressure space 611-1 may be communicated with an inside of the reactor 100. The pressure communication hole 614 may be communicated with the first pressure space 611-1. In addition, the first pressure space 611-1 may be communicated with an inside of the reactor 100 through the pressure communication hole 614, and the reactor connection passage 740 of the working fluid passage portion 700 connected to the reactor connection pipe 101 that is connected to the pressure communication hole 614 and to the inside of the reactor 100. In addition, a pressure in the inside of the reactor 100 may be delivered to the first pressure space 611-1 through the reactor connection pipe 101, the reactor connection passage 740, and the pressure communication hole 614. In other words, a pressure in the first pressure space 611-1 may become identical to a pressure in the inside of the reactor 100.

The second pressure space 611-2 may be communicated with an outside of the safety lock valve 600. A pressure in the second pressure space 611-2 may become identical to a pressure outside the safety lock valve 600. In other words, the second pressure space 611-2 may be communicated with an inside of the containment vessel 200 in which the safety lock valve 600 is disposed. In addition, a pressure in the second pressure space 611-2 may become identical to a pressure in an inside of the containment vessel 200 in which the safety lock valve 600 is disposed. The second pressure space 611-2 may be communicated with the external communication hole 615. In addition, the second pressure space 611-2 may be communicated with an inside of the containment vessel 200, which is external to the safety lock valve 600, through the external communication hole 615.

The first flow communication hole 612 may be connected to the reset valve 400 and the trip valve 500. The first flow communication hole 612 may be connected to the reset valve 400 and the trip valve 500 through the working fluid passage portion 700. The first flow communication hole 612 may be connected to the second working fluid flow passage 730 of the working fluid passage portion 700. The first flow communication hole 612 may be connected to the reset valve 400 and the trip valve 500 through the second working fluid flow passage 730, and the first working fluid flow passage 720 that is connected to the second working fluid flow passage 730 and connected to the reset valve 400 and the trip valve 500. In addition, the first flow communication hole 612 may be communicated with a switching flow path 621-1, to be described below, that is formed in the flow path switching portion 620, in the first state of the safety lock valve 600. In addition, the first flow communication hole 612 may not be communicated with the switching flow path 621-1 in the second state of the safety lock valve 600.

The second flow communication hole 613 may be connected to the main valve 300. The second flow communication hole 613 may be connected to the safety lock valve connection flow path 314 of the main valve 300. The second flow communication hole 613 may be directly connected to the safety lock valve connection flow path 314. The second flow communication hole 613 may also be connected to the safety lock valve connection flow path 314 through a separate working fluid flow passage of the working fluid passage portion 700. In addition, the second flow communication hole 613 may be communicated with the switching flow path 621-1 of the flow path switching portion 620 in the first state of the safety lock valve 600. In addition, the second flow communication hole 613 may not be communicated with the switching flow path 621-1 in the second state of the safety lock valve 600.

The pressure communication hole 614 may be formed such that a fluid that pressurizes the flow path switching portion 620 in a direction in which the flow path switching portion 620 is switched to the second state is introduced into an inside of the safety lock valve body 610. The pressure communication hole 614 may be connected to an inside of the reactor 100. To the pressure communication hole 614, the reactor connection passage 740 of the working fluid passage portion 700, which is connected to the reactor connection pipe 101 that is connected to an inside of the reactor 100, may be connected, so that the pressure communication hole 614 may be connected to the inside of the reactor 100. The pressure communication hole 614 may be communicated with the first pressure space 611-1. In addition, a pressure in an inside of the reactor 100 may be delivered to the first pressure space 611-1 through the pressure communication hole 614. In other words, a pressure in the first pressure space 611-1 may become identical to a pressure in an inside of the reactor 100 through the pressure communication hole 614.

The external communication hole 615 may communicate the second pressure space 611-2 with an outside of the safety lock valve 600. In other words, the external communication hole 615 may communicate the second pressure space 611-2 with an inside of the containment vessel 200, which is external to the safety lock valve 600. The external communication hole 615 may be communicated with the second pressure space 611-2 and the inside of the containment vessel 200, which is external to the safety lock valve 600. In addition, through the external communication hole 615, a fluid may flow in or out of the second pressure space 611-2 when a volume of the second pressure space 611-2 is changed. In addition, through the external communication hole 615, a pressure outside the safety lock valve 600 and a pressure in the second pressure space 611-2 may become identical. In other words, through the external communication hole 615, a pressure in the second pressure space 611-2 may become identical to a pressure in an inside of the containment vessel 200.

The body pressure balance flow path 616 may communicate the first pressure space 611-1 on one side of the flow path switching portion 620 with the first pressure space 611-1 on another side of the flow path switching portion 620. The body pressure balance flow path 616 may communicate the first pressure space 611-1 on one side and the other side of the flow path switching portion 620 with each other, so that pressures in the first pressure space 611-1 on one side and the other side of the flow path switching portion 620 may become identical. For example, the first pressure space 611-1 may include a first pressure space 611-1 on an upper side of the flow path switching portion 620 and a first pressure space 611-1 on a lower side of the flow path switching portion 620. In addition, the body pressure balance flow path 616 may be connected to the first pressure space 611-1 on the upper side of the flow path switching portion 620 and the first pressure space 611-1 on the lower side of the flow path switching portion 620, so that the first pressure space 611-1 on the upper side and the first pressure space 611-1 on the lower side of the flow path switching portion 620 may be communicated with each other. In addition, a pressure in the first pressure space 611-1 on the upper side of the flow path switching portion 620 and a pressure in the first pressure space 611-1 on the lower side of the flow path switching portion 620 may become identical to each other.

The member support portion 617 may be disposed in the flow path switching portion movement space 611 so as to support a part of the flow path switching portion 620. For example, in the first state of the safety lock valve 600, the member support portion 617 may support a part of a lower surface of a movement driving plate 622-2 included in a movement driving member 622, which is included in the flow path switching portion 620 to be described below. In addition, in the second state of the safety lock valve 600, the member support portion 617 may support a part of an upper surface of a flow path switching member 621, which is included in the flow path switching portion 620 to be described below. A support portion member passing hole 617-1 may be formed in the member support portion 617. A movement connection member 622-1, to be described below and included in the movement driving member 622 of the flow path switching portion 620, may movably pass through the support portion member passing hole 617-1.

The flow path switching portion 620 may be disposed to be movable in an inside of the safety lock valve body 610 so as to be moved between the first state and the second state. The flow path switching portion 620 may be movably disposed in the flow path switching portion movement space 611 of the safety lock valve body 610, so as to be moved between the first state and the second state.

In the flow path switching portion 620, the switching flow path 621-1 may be formed. The switching flow path 621-1 may be communicated with the first flow communication hole 612 and the second flow communication hole 613 in the first state of the flow path switching portion 620. In addition, the switching flow path 621-1 may be communicated with the second working fluid flow passage 730 of the working fluid passage portion 700, which is connected to the first flow communication hole 612, in the first state of the flow path switching portion 620. In addition, in the first state, the switching flow path 621-1 may be connected to the reset valve 400 and the trip valve 500, which are connected to the first working fluid flow passage 720, through the first working fluid flow passage 720 that is connected to the second working fluid flow passage 730. In addition, the switching flow path 621-1 may be connected to the main valve 300, which is connected to the second flow communication hole 613, in the first state of the flow path switching portion 620. In addition, the switching flow path 621-1 may be communicated with the safety lock valve connection flow path 314 of the main valve 300, which is connected to the second flow communication hole 613, in the first state of the flow path switching portion 620. In other words, the switching flow path 621-1 may be connected to the reset valve 400, the trip valve 500, and the main valve 300 in the first state of the flow path switching portion 620.

The switching flow path 621-1 may be blocked from being communicated with the first flow communication hole 612 and the second flow communication hole 613 in the second state of the flow path switching portion 620. In other words, the switching flow path 621-1 may not be connected to the reset valve 400, the trip valve 500, and the main valve 300 in the second state of the flow path switching portion 620. The flow path switching portion 620 may include the flow path switching member 621 and the movement driving member 622.

The flow path switching member 621 may be disposed to be movable in an inside of the safety lock valve body 610 so as to be moved between the first state and the second state. The flow path switching member 621 may be disposed to be movable in the flow path switching portion movement space 611 of the safety lock valve body 610, so as to be moved between the first state and the second state. The switching flow path 621-1 may be formed in the flow path switching member 621.

The movement driving member 622 may be connected to the flow path switching member 621 so as to be moved together with the flow path switching member 621, and the flow path switching bellows 640 may be connected to the movement driving member 622. The movement driving member 622 may include the movement connection member 622-1 and the movement driving plate 622-2.

The movement connection member 622-1 may be connected to the flow path switching member 621. In addition, the movement connection member 622-1 may be movable by passing through the support portion member passing hole 617-1 of the member support portion 617.

The movement driving plate 622-2 may be connected to the movement connection member 622-1. In addition, the flow path switching bellows 640 may be connected to the movement driving plate 622-2. An elastic force of the flow path switching elastic member 630 may act on the movement driving plate 622-2 in a direction in which the movement driving plate 622-2 is moved to the first state. In addition, a pressure of an outside of the safety lock valve 600, which is a pressure in the second pressure space 611-2, may act on the movement driving plate 622-2 in a direction in which the movement driving plate 622-2 is switched to the first state. In other words, a pressure in an inside of the containment vessel 200, which is a pressure of the second pressure space 611-2, may act on the movement driving plate 622-2 in a direction in which movement driving plate 622-2 is switched to the first state.

The flow path switching elastic member 630 may provide an elastic force to the flow path switching portion 620 in a direction in which the flow path switching portion 620 is switched to the first state. The flow path switching elastic member 630 may be disposed between the safety lock valve body 610 on a side of the external communication hole 615 and the movement driving member 622 of the flow path switching portion 620. The flow path switching elastic member 630 may be disposed in the flow path switching portion movement space 611, between the safety lock valve body 610 on a side of the external communication hole 615 and the movement driving member 622 of the flow path switching portion 620. The flow path switching elastic member 630 may be disposed in the flow path switching portion movement space 611, between the safety lock valve body 610 on a side of the external communication hole 615 and the movement driving plate 622-2 of the movement driving member 622. The flow path switching elastic member 630 may be disposed in an inside of the flow path switching bellows 640.

The flow path switching bellows 640 may be disposed in the flow path switching portion movement space 611 so as to be connected to the safety lock valve body 610 and the flow path switching portion 620, and may block communication between the first pressure space 611-1 and the second pressure space 611-2. The flow path switching bellows 640 may be connected to the safety lock valve body 610 on a side of the external communication hole 615 and the movement driving member 622 of the flow path switching portion 620 such that an inside thereof is communicated with the external communication hole 615. The flow path switching bellows 640 may be connected to the safety lock valve body 610 on a side of the external communication hole 615 and the movement driving plate 622-2 of the movement driving member 622, such that an inside thereof is communicated with the external communication hole 615. In addition, the flow path switching portion movement space 611 outside the flow path switching bellows 640 may be included in the first pressure space 611-1, and the flow path switching portion movement space 611 inside the flow path switching bellows 640 may be included in the second pressure space 611-2.

The working fluid passage portion 700 may be connected so that a working fluid flows between two or more of the main valve 300, the reset valve 400, the trip valve 500, or the safety lock valve 600. The working fluid passage portion 700 may include the working fluid supply passage 710, the first working fluid flow passage 720, the second working fluid flow passage 730, the reactor connection passage 740, and the third working fluid flow passage 750.

The working fluid supply passage 710 may provide a passage in which a working fluid flows between the working fluid supply source 2, in which the working fluid is stored, and the reset valve 400. The working fluid supply passage 710 may be connected to the working fluid supply source 2 and the reset valve 400, and may be a flow pipe through which the working fluid flows.

The first working fluid flow passage 720 may provide a passage in which the working fluid flows between the reset valve 400 and the trip valve 500. The first working fluid flow passage 720 may be connected to the reset valve 400 and the trip valve 500, and may be a flow pipe through which the working fluid flows.

The second working fluid flow passage 730 may provide a passage in which the working fluid flows between the first working fluid flow passage 720 and the safety lock valve 600. The second working fluid flow passage 730 may be connected to the first working fluid flow passage 720 and the safety lock valve 600, and may be a flow pipe through which the working fluid flows. The second working fluid flow passage 730 may be connected to the first working fluid flow passage 720 and the first flow communication hole 612 of the safety lock valve 600.

The reactor connection passage 740 may provide a passage in which a fluid flows between the safety lock valve 600 and an inside of the reactor 100. The reactor connection passage 740 may be connected to the safety lock valve 600 and an inside of the reactor 100, and may be a flow pipe through which a fluid flows. The reactor connection passage 740 may be connected to the pressure communication hole 614 of the safety lock valve 600, and to the reactor connection pipe 101 that is connected to an inside of the reactor 100.

The third working fluid flow passage 750 may provide a passage in which a working fluid flows between the trip valve 500 and an inside of the containment vessel 200. The third working fluid flow passage 750 may be connected to the trip valve 500 and the inside of the containment vessel 200, and may be a flow pipe through which the working fluid flows.

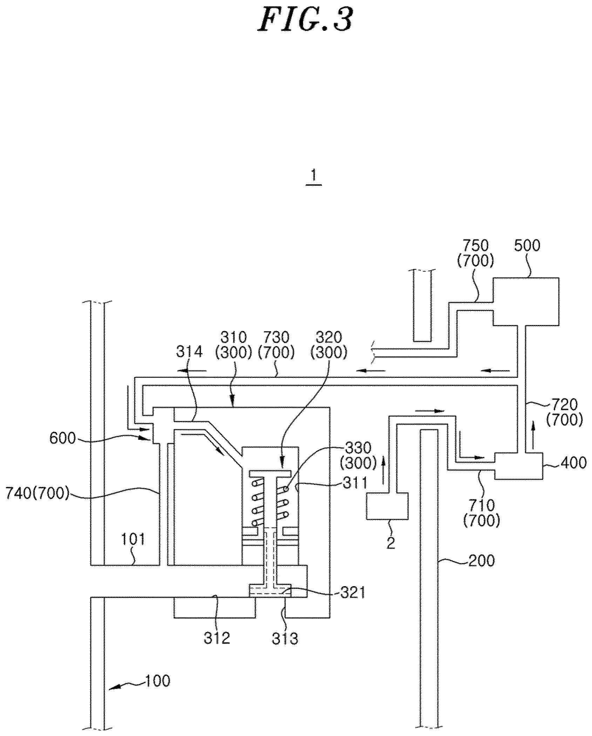

Hereinafter, with reference to FIGS. 3 to 10, operation and effects of a nuclear equipment 1 having the above-described configuration will be described.

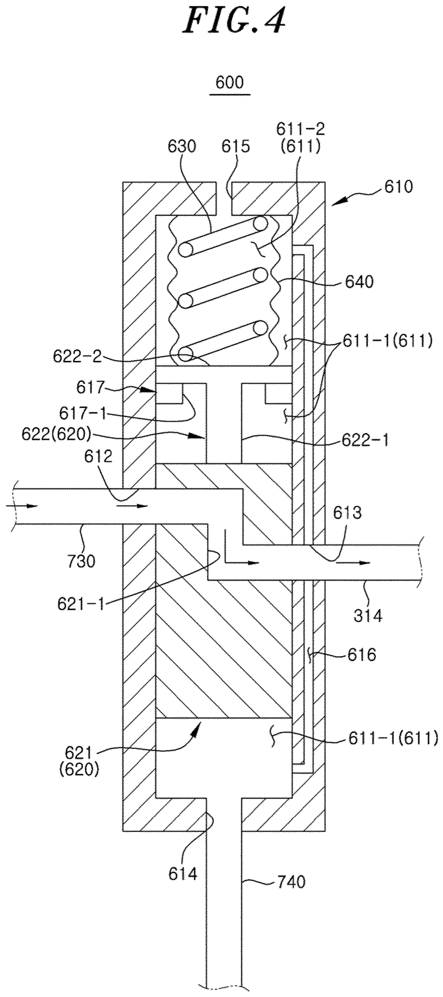

With reference to FIGS. 3 and 4, during initial operation of the reactor 100 of the nuclear equipment 1, the reset valve 400 may be opened, and the trip valve 500 may be closed. For example, electricity may be applied to the reset valve 400 through the reset valve controller so that the reset valve 400 may be opened. In addition, electricity may be applied to the trip valve 500 through a trip valve controller so that the trip valve 500 may be closed. By such operation, a working fluid of the working fluid supply source 2 may be supplied to the safety lock valve 600 through the working fluid supply passage 710, the reset valve 400, the first working fluid flow passage 720, and the second working fluid flow passage 730.

Meanwhile, since the reactor 100 is in initial operation, a pressure in the inside of the reactor 100 may be lower than a normal operation pressure, which is a pressure during normal operation. Accordingly, a difference between a pressure in an inside of the reactor 100 and a pressure in an inside of the containment vessel 200 may be smaller than a predetermined pressure difference. In addition, a difference between a pressure in the first pressure space 611-1 and a pressure in the second pressure space 611-2 of the safety lock valve 600 may also be smaller than the predetermined pressure difference. In other words, the difference between the pressure in the first pressure space 611-1 and the pressure in the second pressure space 611-2 may be smaller than a predetermined pressure difference, which is a pressure difference between the inside of the reactor 100 and the inside of the containment vessel 200 during normal operation of the reactor 100. In addition, a force due to the difference between the pressure in the first pressure space 611-1 and the pressure in the second pressure space 611-2 may be smaller than an elastic force of the flow path switching elastic member 630.

In addition, the flow path switching portion 620 may be switched to the first state by an elastic force of the flow path switching elastic member 630 acting on the flow path switching portion 620. In other words, the flow path switching portion 620 may be switched to the first state in which the switching flow path 621-1 is communicated with the first flow communication hole 612 and the second flow communication hole 613 of the safety lock valve body 610. For example, the flow path switching portion 620 may be moved downward by an elastic force of the flow path switching elastic member 630 acting on the movement driving plate 622-2, so that the switching flow path 621-1 is communicated with the first flow communication hole 612 and the second flow communication hole 613 of the safety lock valve body 610, thereby becoming the first state. Accordingly, a working fluid supplied to the safety lock valve 600 may be supplied to the main valve 300 by flowing through the first flow communication hole 612, the switching flow path 621-1, and the second flow communication hole 613.

When the working fluid is supplied to the main valve 300, the working fluid may flow through the safety lock valve connection flow path 314, which is connected to the second flow communication hole 613 of the safety lock valve 600, and a force due to a supply pressure of the working fluid may act on the main valve plunger 320. In addition, by the main valve plunger 320 being moved to close the main valve opening and closing hole 313 by overcoming an elastic force of the main valve elastic member 330 with the force due to the supply pressure of the working fluid, the main valve 300 may be closed. When the main valve 300 is closed, the reset valve 400 may be closed. For example, the reset valve 400 may be closed by not applying electricity to the reset valve 400 through the reset valve controller.

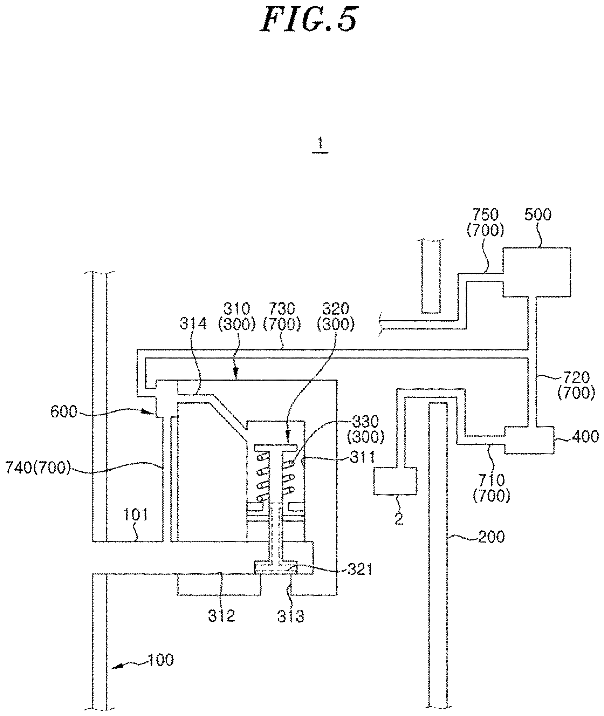

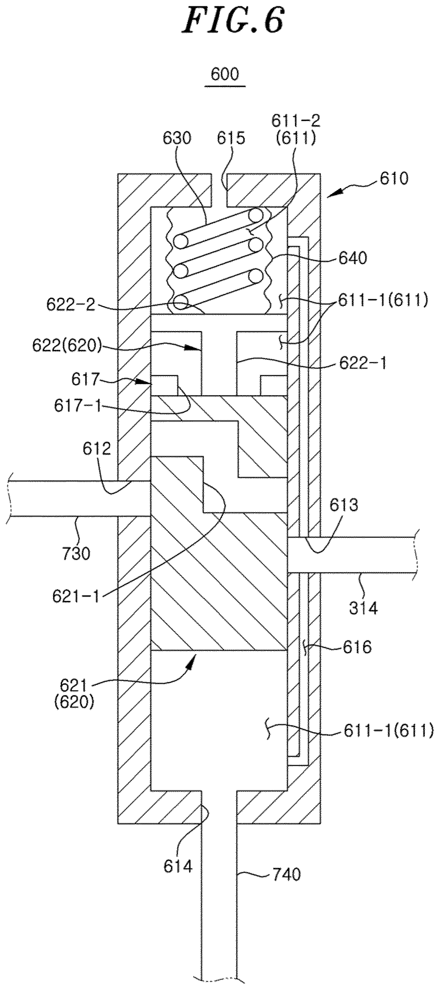

With reference to FIGS. 5 and 6, during normal operation of the reactor 100, a pressure in an inside of the reactor 100 may be increased up to a normal operation pressure. Accordingly, a difference between a pressure in the inside of the reactor 100 and a pressure in an inside of the containment vessel 200 may be equal to or greater than a predetermined pressure difference. In addition, a difference between a pressure in the first pressure space 611-1 and a pressure in the second pressure space 611-2 of the safety lock valve 600 may also be equal to or greater than the predetermined pressure difference. In addition, a force due to the difference between the pressure in the first pressure space 611-1 and the pressure in the second pressure space 611-2 may be greater than an elastic force of the flow path switching elastic member 630.

In addition, the flow path switching portion 620 may be switched to the second state by a force due to the pressure difference between the first pressure space 611-1 and the second pressure space 611-2, which acts on the flow path switching portion 620. In other words, the flow path switching portion 620 may be moved to the second state in which the switching flow path 621-1 is not communicated with the first flow communication hole 612 and the second flow communication hole 613 of the safety lock valve body 610. For example, the flow path switching portion 620 may be moved upward by a force due to a difference between a pressure in the first pressure space 611-1, which acts on the flow path switching member 621, and a pressure in the second pressure space 611-2, which acts on a movement driving plate 622-2 of the movement driving member 622. In addition, the flow path switching portion 620 may be in the second state in which the switching flow path 621-1 is not communicated with the first flow communication hole 612 and the second flow communication hole 613 of the safety lock valve body 610. In addition, the flow path switching elastic member 630 may be compressed by a force due to a difference between a pressure in the first pressure space 611-1, which acts on the flow path switching member 621, and a pressure in the second pressure space 611-2, which acts on the movement driving plate 622-2 of the movement driving member 622.

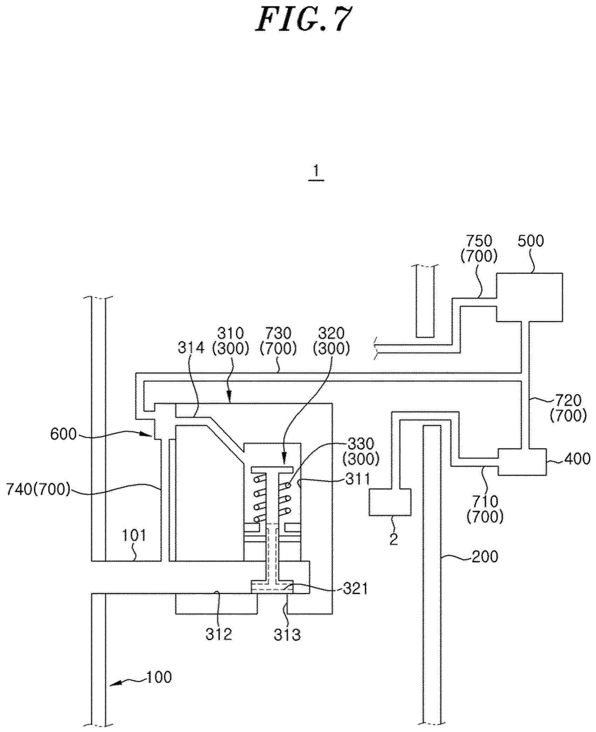

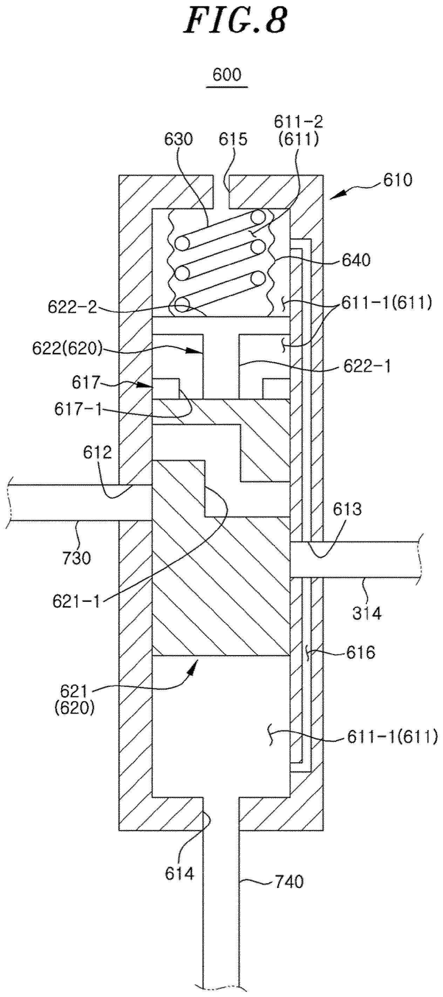

With reference to FIGS. 7 and 8, the trip valve 500 may be unintentionally opened due to a mistake by an operator or the like, during normal operation of the reactor 100. In other words, during a time when a pressure of the reactor 100 is at a normal operation pressure, the trip valve 500 may be unintentionally opened due to a mistake by an operator or the like. However, since the reactor 100 is in normal operation, a pressure of the reactor 100 may be maintained at the normal operation pressure. Accordingly, a difference between a pressure in the inside of the reactor 100 and a pressure in the inside of the containment vessel 200 may be equal to or greater than a predetermined pressure difference. In addition, a difference between a pressure in the first pressure space 611-1 and a pressure in the second pressure space 611-2 of the safety lock valve 600 may also be equal to or greater than the predetermined pressure difference.

In addition, a force equal to or greater than the predetermined pressure difference may continuously act on the flow path switching portion 620. In addition, the flow path switching portion 620 may continuously maintain the second state in which the switching flow path 621-1 is not communicated with the first flow communication hole 612 and the second flow communication hole 613, by a force due to a pressure difference equal to or greater than the predetermined pressure difference, which acts on the flow path switching portion 620. Accordingly, even if the trip valve 500 is opened unintentionally due to a mistake by an operator or the like, the main valve 300 may not be opened, because the flow path switching portion 620 may continuously maintain the second state. In other words, maloperation can be prevented.

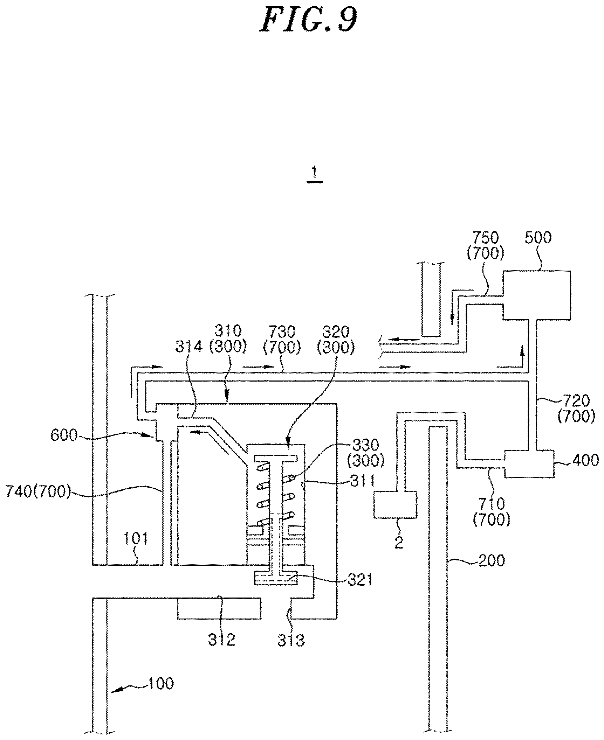

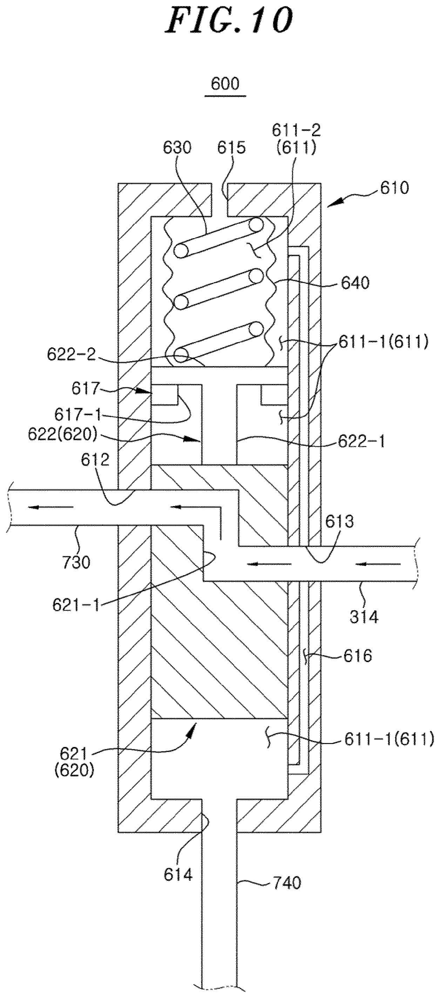

With reference to FIGS. 9 and 10, during an accident of the reactor 100, the trip valve 500 may be opened. For example, the trip valve 500 may be opened by not applying electricity to the trip valve 500 through the trip valve controller.

During an accident of the reactor 100, a pressure in an inside of the reactor 100 may be lower than a normal operation pressure. Accordingly, a difference between a pressure in the inside of the reactor 100 and a pressure in an inside of the containment vessel 200 may be smaller than a predetermined pressure difference. In addition, a difference between a pressure in the first pressure space 611-1 and a pressure in the second pressure space 611-2 of the safety lock valve 600 may also be smaller than the predetermined pressure difference. In addition, a force due to the difference between the pressure in the first pressure space 611-1 and the pressure in the second pressure space 611-2 may be smaller than an elastic force of the flow path switching elastic member 630. In addition, the flow path switching portion 620 may be switched to the first state by an elastic force of the flow path switching elastic member 630 acting on the flow path switching portion 620. In other words, the flow path switching portion 620 may be switched to the first state in which the switching flow path 621-1 is communicated with the first flow communication hole 612 and the second flow communication hole 613 of the safety lock valve body 610. For example, the flow path switching portion 620 may be moved downward by an elastic force of the flow path switching elastic member 630 acting on the movement driving plate 622-2, so that the switching flow path 621-1 is communicated with the first flow communication hole 612 and the second flow communication hole 613 of the safety lock valve body 610, thereby becoming the first state.

Accordingly, a working fluid of the main valve 300 may be discharged from the main valve 300. In other words, the working fluid in the main valve plunger movement space 311 of the main valve 300 may be discharged from the main valve 300 through the safety lock valve connection flow path 314 of the main valve 300. In addition, the main valve plunger 320 of the main valve 300 may be moved so that the main valve opening and closing hole 313 is opened, by an elastic force of the main valve elastic member 330. In other words, the main valve 300 may be opened. When the main valve 300 is opened, a cooling fluid in an inside of the containment vessel 200 may be recirculated into an inside of the reactor 100 so that emergency core cooling may be achieved. A working fluid discharged from the main valve 300 may flow to the trip valve 500 through the second flow communication hole 613, the switching flow path 621-1, the first flow communication hole 612, the second working fluid flow passage 730, and the first working fluid flow passage 720 of the safety lock valve 600. The working fluid that has flowed to the trip valve 500 may flow into an inside of the containment vessel 200 through the third working fluid flow passage 750.

As described above, according to the first embodiment of the nuclear equipment 1, there is an effect that the safety lock valve 600 may have a relatively simple configuration and may be easy to manufacture.

Meanwhile, in addition to such a configuration, according to a second embodiment of the present disclosure, the flow path switching bellows 640 may be connected to the safety lock valve body 610 and the movement driving member 622, between the movement driving member 622 and the flow path switching member 621.

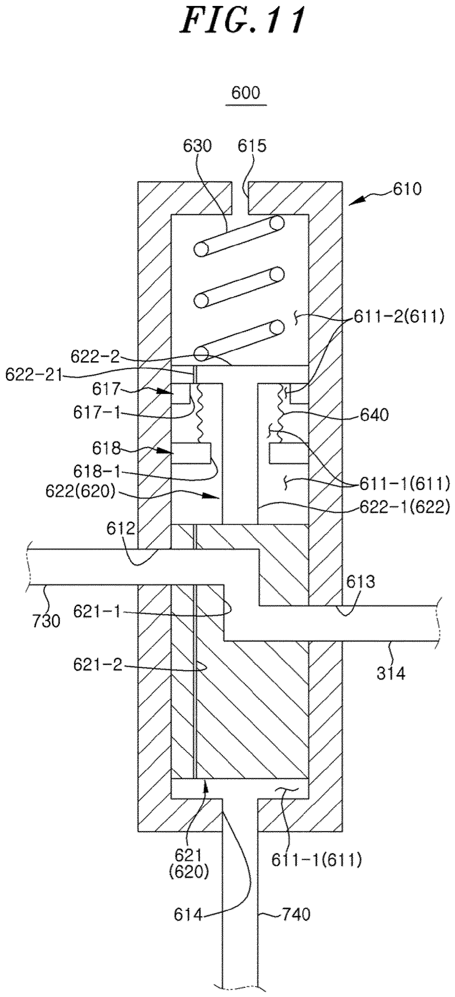

Hereinafter, the second embodiment will be described with reference to FIG. 11. In describing the second embodiment of the present disclosure, compared to the above-described embodiment, a difference is that the flow path switching bellows 640 is connected to the safety lock valve body 610 and the movement driving member 622, between the movement driving member 622 and the flow path switching member 621, and such a difference will be mainly described, and the same description and reference numerals will be applied from the above-described embodiments.

With reference to FIG. 11, the flow path switching bellows 640 may be connected to the safety lock valve body 610 and the movement driving member 622, between the movement driving member 622 and the flow path switching member 621. For example, a bellows connection portion 618 may be disposed in the flow path switching portion movement space 611, which is below the member support portion 617 and between the movement driving member 622 and the flow path switching member 621. In addition, the flow path switching bellows 640 may be connected to the bellows connection portion 618 and the movement driving plate 622-2 of the movement driving member 622.

The first pressure space 611-1 may include the flow path switching portion movement space 611, which is communicated with an inside of the flow path switching bellows 640 and the pressure communication hole 614, and the second pressure space 611-2 may include the flow path switching portion movement space 611, which is communicated with an outside of the flow path switching bellows 640 and the external communication hole 615.

In addition, a first member pressure balance flow path 621-2 may be formed in the flow path switching member 621, which communicates a first pressure space 611-1 on one side of the flow path switching member 621 and a first pressure space 611-1 on another side of the flow path switching member 621 with each other. For example, the first pressure space 611-1 may include a first pressure space 611-1 on an upper side of the flow path switching member 621 and a first pressure space 611-1 on a lower side of the flow path switching member 621. In addition, the first member pressure balance flow path 621-2 may be formed in the flow path switching member 621 to be connected to the first pressure space 611-1 on the upper side of the flow path switching member 621 and the first pressure space 611-1 on the lower side of the flow path switching member 621. In addition, the first member pressure balance flow path 621-2 may communicate the first pressure space 611-1 on the upper side of the flow path switching member 621 and the first pressure space 611-1 on the lower side of the flow path switching member 621 with each other. In addition, a pressure in the first pressure space 611-1 on the upper side of the flow path switching member 621 and a pressure in the first pressure space 611-1 on the lower side of the flow path switching member 621 may become identical to each other.

In addition, a second member pressure balance flow path 622-21 may be formed in the movement driving member 622, which communicates a second pressure space 611-2 on one side of the movement driving member 622 and a second pressure space 611-2 on another side of the movement driving member 622 with each other. For example, the second pressure space 611-2 may include a second pressure space 611-2 on an upper side of the movement driving plate 622-2 of the movement driving member 622, and a second pressure space 611-2 on a lower side of the movement driving plate 622-2. In addition, the second member pressure balance flow path 622-21 may be formed in the movement driving plate 622-2 to be connected to the second pressure space 611-2 on the upper side of the movement driving plate 622-2 and the second pressure space 611-2 on the lower side of the movement driving plate 622-2. In addition, the second member pressure balance flow path 622-21 may communicate the second pressure space 611-2 on the upper side of the movement driving plate 622-2 and the second pressure space 611-2 on the lower side of the movement driving plate 622-2 with each other. In addition, a pressure in the second pressure space 611-2 on the upper side of the movement driving plate 622-2 and a pressure in the second pressure space 611-2 on the lower side of the movement driving plate 622-2 may become identical to each other. Meanwhile, even if the second member pressure balance flow path 622-21 is not provided, a pressure in a second pressure space 611-2 on one side of the movement driving member 622 and a pressure in a second pressure space 611-2 on another side of the movement driving member 622 may become identical to each other. In this case, the second member pressure balance flow path 622-21 may be omitted.

Meanwhile, in addition to such a configuration, according to a third embodiment of the present disclosure, an overpressure prevention hole 619 may be further formed in the safety lock valve body 610, the working fluid passage portion 700 may further include a fourth working fluid flow passage 760 and a fifth working fluid flow passage 770, and may further include an overpressure prevention valve 800.

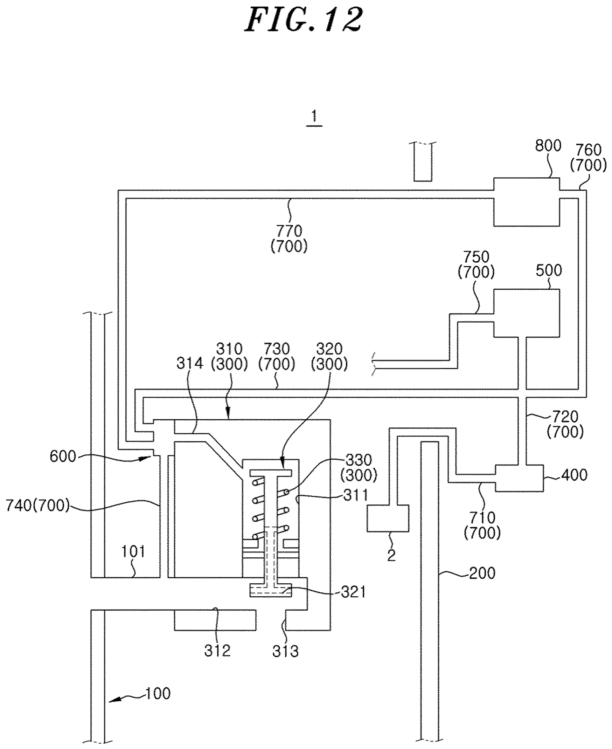

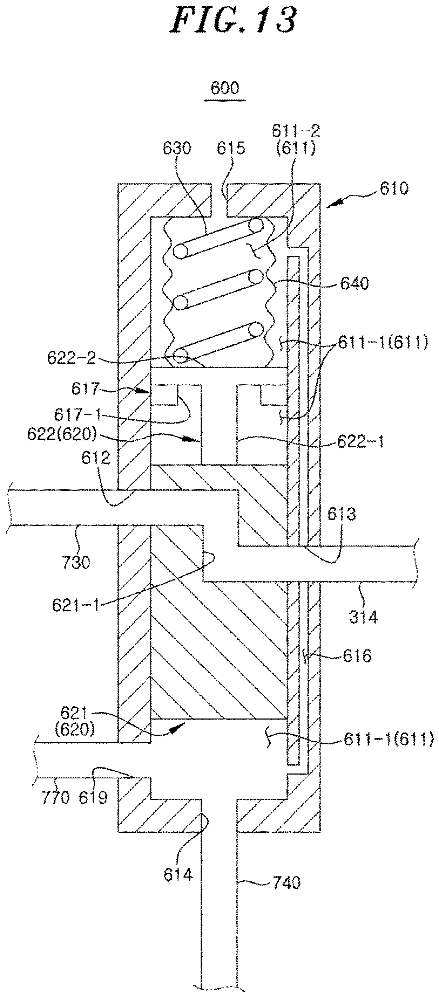

Hereinafter, the third embodiment will be described with reference to FIGS. 12 to 17. In describing the third embodiment of the present disclosure, compared to the above-described embodiments, a difference is that the overpressure prevention hole 619 is further formed in the safety lock valve body 610, the working fluid passage portion 700 further includes the fourth working fluid flow passage 760 and the fifth working fluid flow passage 770, and the overpressure prevention valve 800 is further included, and such a difference will be mainly described, and the same description and reference numerals will be applied from the above-described embodiments.

With reference to FIGS. 12 to 17, the overpressure prevention hole 619 may be further formed in the safety lock valve body 610. The overpressure prevention hole 619 may be formed in the safety lock valve body 610 to be communicated with the pressure communication hole 614. The fifth working fluid flow passage 770 may be connected to the pressure communication hole 614.

The working fluid passage portion 700 may further include the fourth working fluid flow passage 760 and the fifth working fluid flow passage 770.

The fourth working fluid flow passage 760 may provide a passage through which a working fluid flows between the overpressure prevention valve 800 and the trip valve 500. The fourth working fluid flow passage 760 may be connected to the overpressure prevention valve 800 and the trip valve 500, and may be a flow pipe through which the working fluid flows. The fourth working fluid flow passage 760 may be connected to the first working fluid flow passage 720, and may be connected to the trip valve 500.

The fifth working fluid flow passage 770 may provide a passage through which the working fluid flows between the overpressure prevention valve 800 and the safety lock valve 600. The fifth working fluid flow passage 770 may be connected to the overpressure prevention valve 800 and the safety lock valve 600, and may be a flow pipe through which the working fluid flows. The fifth working fluid flow passage 770 may be connected to the overpressure prevention hole 619 of the safety lock valve 600.

The overpressure prevention valve 800 may be opened together with the trip valve 500 so that the working fluid is discharged from the main valve 300, when a pressure in an inside of the reactor 100 becomes equal to or greater than a design pressure, which is higher than a normal operation pressure. When a pressure in an inside of the reactor 100 becomes equal to or greater than a design pressure, the overpressure prevention valve 800 may be opened so that a working fluid is discharged from a main valve 300, whereby the main valve 300 may be opened. The overpressure prevention valve 800 may be connected to the trip valve 500 and the safety lock valve 600. The overpressure prevention valve 800 may be connected to the trip valve 500 and the safety lock valve 600 through the working fluid passage portion 700. The overpressure prevention valve 800 may be connected to the fourth working fluid flow passage 760, which is connected to the first working fluid flow passage 720 that is connected to the trip valve 500, so that the overpressure prevention valve 800 is connected to the trip valve 500. In addition, the overpressure prevention valve 800 may be connected to the fifth working fluid flow passage 770, which is connected to the overpressure prevention hole 619 of the safety lock valve 600, so that the overpressure prevention valve 800 is connected to the safety lock valve 600.

The overpressure prevention valve 800 may be configured to be opened when electricity is not applied, and to be closed when electricity is applied. For example, the overpressure prevention valve 800 may include a valve body in which an opening and closing hole is formed, a plunger that is disposed to be movable inside the valve body, an elastic member that applies an elastic force to the plunger in a direction of opening the opening and closing hole, and a solenoid that applies a driving force to the plunger in a direction of closing the opening and closing hole. In addition, when electricity is not applied to the solenoid, the plunger may be moved by the elastic force of the elastic member to open the opening and closing hole of the valve body. In addition, when electricity is applied to the solenoid, the plunger may move overcoming the elastic force of the elastic member to close the opening and closing hole of the valve body. Opening and closing of the overpressure prevention valve 800 may be performed by a overpressure prevention valve controller connected to the solenoid of the overpressure prevention valve 800. The overpressure prevention valve controller may be implemented by an arithmetic device including a microprocessor, a memory, and the like, and since the implementation method is obvious to those skilled in the art, a detailed description thereof will be omitted.

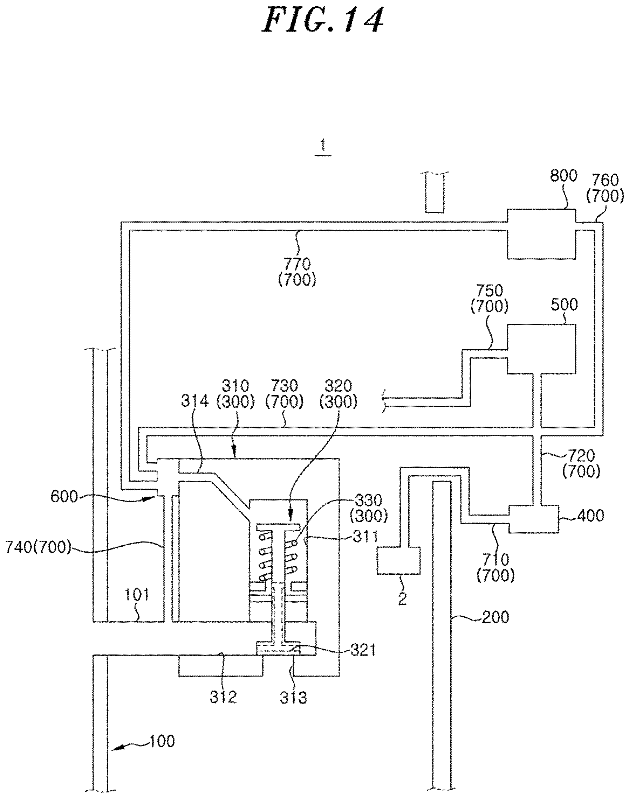

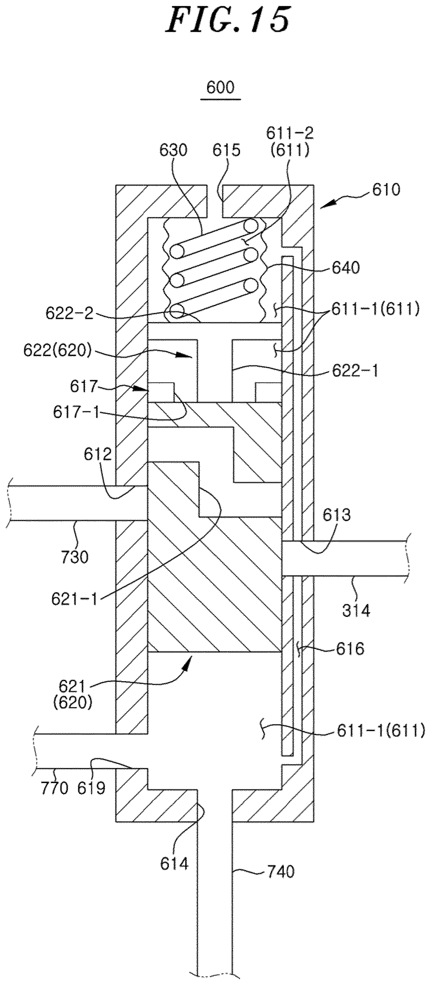

With reference to FIGS. 14 and 15, when the trip valve 500 is unintentionally opened due to a mistake by an operator or the like during normal operation of the reactor 100, even if the safety lock valve 600 is in the second state, a cooling fluid in an inside of the reactor 100 may flow to the overpressure prevention valve 800 through the reactor connection pipe 101, the reactor connection passage 740, the pressure communication hole 614, the first pressure space 611-1, the overpressure prevention hole 619, and the fifth working fluid flow passage 770. However, since the overpressure prevention valve 800 is closed, the cooling fluid in the reactor 100 may not be discharged into an inside of the containment vessel 200. In other words, maloperation may be prevented.

In addition, when the overpressure prevention valve 800 is unintentionally opened due to a mistake by an operator or the like during normal operation of the reactor 100, even if the safety lock valve 600 is in the second state, a cooling fluid in an inside of the reactor 100 may flow to the overpressure prevention valve 800 through the reactor connection pipe 101, the reactor connection passage 740, the pressure communication hole 614, the first pressure space 611-1, the overpressure prevention hole 619, and the fifth working fluid flow passage 770. However, since the trip valve 500 is closed, the cooling fluid in the reactor 100 may not be discharged into an inside of the containment vessel 200. In other words, maloperation may be prevented.

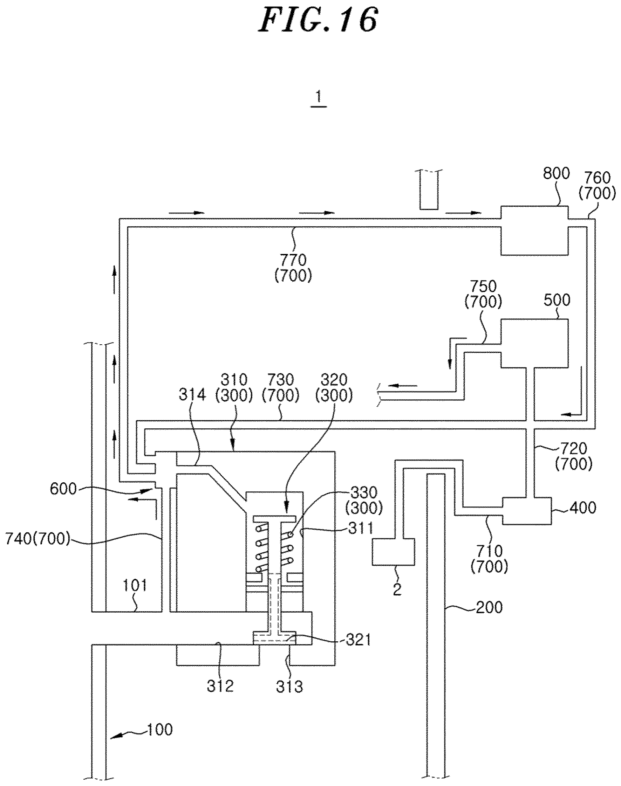

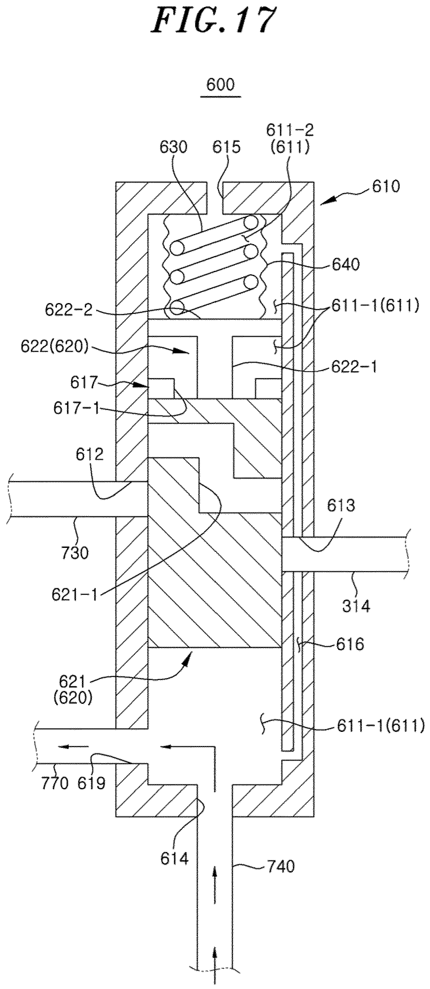

With reference to FIGS. 16 and 17, during overpressure of the reactor 100, the trip valve 500 and the overpressure prevention valve 800 may be opened. In other words, when a pressure in an inside of the reactor 100 becomes equal to or greater than a design pressure, which is higher than a normal operation pressure, the trip valve 500 and the overpressure prevention valve 800 may be opened. For example, the trip valve 500 may be opened by not applying electricity to the trip valve 500 through the trip valve controller, and the overpressure prevention valve 800 may be opened by not applying electricity to the overpressure prevention valve 800 through the overpressure prevention valve controller.

When the trip valve 500 and the overpressure prevention valve 800 are opened, even if the safety lock valve 600 is in the second state, a cooling fluid in an inside of the reactor 100 may flow to the overpressure prevention valve 800 through the reactor connection pipe 101, the reactor connection passage 740, the pressure communication hole 614, the first pressure space 611-1, the overpressure prevention hole 619, and the fifth working fluid flow passage 770. The cooling fluid that has flowed to the overpressure prevention valve 800 may flow to the trip valve 500 through the fourth working fluid flow passage 760 and the first working fluid flow passage 720. The cooling fluid that has flowed to the trip valve 500 may be discharged into an inside of the containment vessel 200 through the third working fluid flow passage 750. In addition, a pressure in an inside of the reactor 100 may become lower than the design pressure. When the pressure in the inside of the reactor 100 becomes lower than the design pressure, and further becomes lower than the normal operation pressure, the safety lock valve 600 may be converted to the first state, so that a working fluid may be discharged from the main valve 300. The working fluid discharged from the main valve 300 may flow to the trip valve 500 through the safety lock valve 600, the second working fluid flow passage 730, and the first working fluid flow passage 720, and may be discharged into an inside of the containment vessel 200 through the third working fluid flow passage 750. In addition, the main valve 300 may be opened. When the main valve 300 is opened, a cooling fluid in an inside of the containment vessel 200 may be recirculated into an inside of the reactor 100 so that emergency core cooling may be achieved.

Meanwhile, in addition to such a configuration, according to a fourth embodiment of the present disclosure, an overpressure prevention flow path 621-3 may be further formed in the flow path switching portion 620.

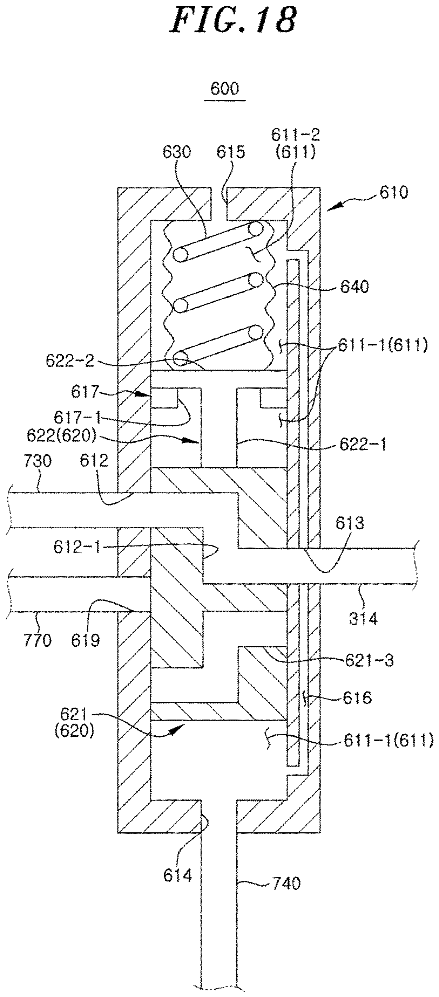

Hereinafter, the fourth embodiment will be described with reference to FIG. 18. In describing the fourth embodiment of the present disclosure, compared to the above-described embodiments, a difference is that the overpressure prevention flow path 621-3 is further formed in the flow path switching portion 620, and such a difference will be mainly described, and the same description and reference numerals will be applied from the above-described embodiments.

With reference to FIG. 18, the overpressure prevention flow path 621-3 may be further formed in the flow path switching portion 620. The overpressure prevention flow path 621-3 may be communicated with the overpressure prevention hole 619 and the second flow communication hole 613 in the second state of the safety lock valve 600. In addition, the overpressure prevention flow path 621-3 may not be communicated with the overpressure prevention hole 619 and the second flow communication hole 613 in the first state of the safety lock valve 600.

When the overpressure prevention valve 800 is unintentionally opened due to a mistake by an operator or the like during normal operation of the reactor 100, even if the safety lock valve 600 is in the second state, a working fluid inside the main valve 300 may flow to the overpressure prevention valve 800 through the safety lock valve connection flow path 314, the second flow communication hole 613, the overpressure prevention flow path 621-3, and the fifth working fluid flow passage 770. However, since the trip valve 500 is closed, the working fluid may not be discharged into an inside of the containment vessel 200. In other words, maloperation may be prevented.

When the trip valve 500 and the overpressure prevention valve 800 are opened during overpressure of the reactor 100, a working fluid inside the main valve 300 may flow to the overpressure prevention valve 800 through the safety lock valve connection flow path 314, the second flow communication hole 613, the overpressure prevention flow path 621-3, and the fifth working fluid flow passage 770. The cooling fluid that has flowed to the overpressure prevention valve 800 may flow to the trip valve 500 through the fourth working fluid flow passage 760 and the first working fluid flow passage 720. The working fluid that has flowed to the trip valve 500 may be discharged into an inside of the containment vessel 200 through the third working fluid flow passage 750. In addition, a pressure in an inside of the reactor 100 may become lower than the design pressure. In addition, the main valve 300 may be opened. When the main valve 300 is opened, a cooling fluid in an inside of the reactor 100 may be discharged into an inside of the containment vessel 200 through the main valve 300. In addition, a pressure in the inside of the reactor 100 may become lower than a design pressure, and may become lower than a normal operation pressure, and the safety lock valve 600 may be converted to the first state. In addition, a cooling fluid in an inside of the containment vessel 200 may be recirculated into an inside of the reactor 100 so that emergency core cooling may be achieved.

Meanwhile, in addition to such a configuration, according to a fifth embodiment of the present disclosure, the fourth working fluid flow passage 760 may be directly connected to the trip valve 500.

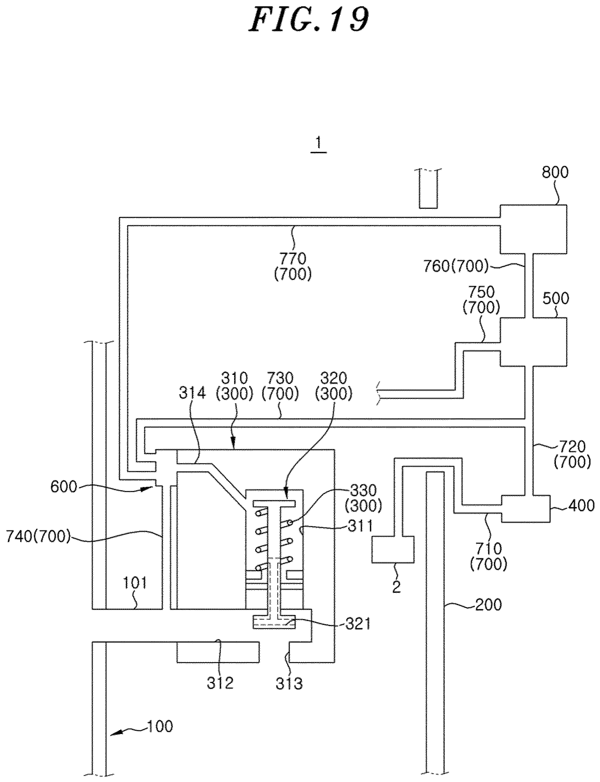

Hereinafter, the fifth embodiment will be described with reference to FIG. 19. In describing the fifth embodiment of the present disclosure, compared to the above-described embodiments, a difference is that the fourth working fluid flow passage 760 is directly connected to the trip valve 500, and such a difference will be mainly described, and the same description and reference numerals will be applied from the above-described embodiments.

With reference to FIG. 19, the fourth working fluid flow passage 760 may be directly connected to the trip valve 500, without being connected to the first working fluid flow passage 720.

Meanwhile, in addition to such a configuration, according to a sixth embodiment of the present disclosure, the nuclear equipment 1 may further include a safety locking auxiliary check valve 900.

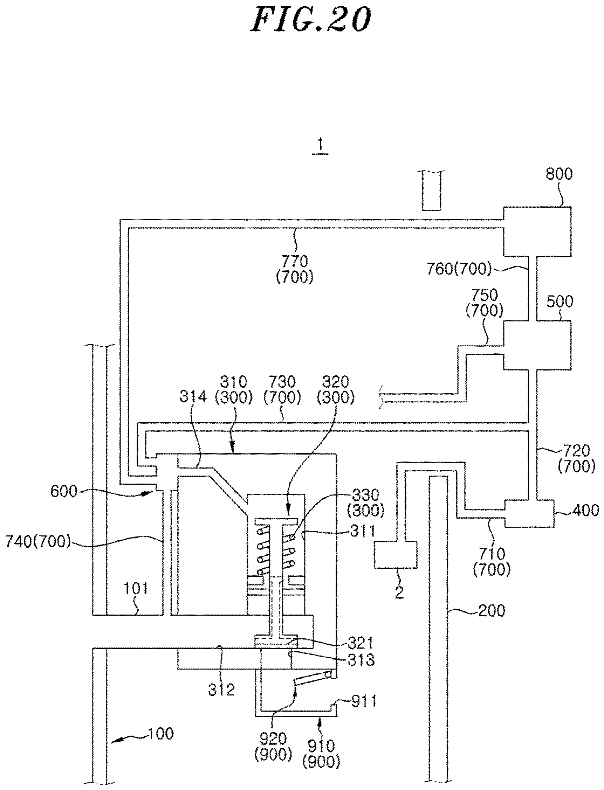

Hereinafter, the sixth embodiment will be described with reference to FIG. 20. In describing the sixth embodiment of the present disclosure, compared to the above-described embodiment, a difference is that the nuclear equipment 1 further includes the safety locking auxiliary check valve 900, and such a difference will be mainly described, and the same description and reference numerals will be applied from the above-described embodiments.

With reference to FIG. 20, the nuclear equipment 1 may further include the safety locking auxiliary check valve 900. The safety locking auxiliary check valve 900 may be configured to allow a flow of fluid in a direction from an inside of the containment vessel 200 to an inside of the reactor 100 when the main valve 300 is opened, but not allow a flow of fluid in a direction from the inside of the reactor 100 to the inside of the containment vessel 200.

The main valve 300 may be opened due to an accident of the reactor 100 or a power failure of the nuclear equipment 1. In addition, during depressurization of the reactor 100 for maintenance, repair, or refueling of the reactor 100, a pressure of the reactor 100 may drop to atmospheric pressure, and the main valve 300 may be opened. In such a situation where the main valve 300 is opened, the safety locking auxiliary check valve 900 may allow a flow of fluid in a direction from the inside of the containment vessel 200 to the inside of the reactor 100, but may not allow a flow of fluid in a direction from the inside of the reactor 100 to the inside of the containment vessel 200.

During an accident of the reactor 100 or a power failure of the nuclear equipment 1, a fluid level of cooling fluid in the containment vessel 200 may not be higher than a fluid level of cooling fluid in the reactor 100. In addition, the main valve 300 may be opened, and the cooling fluid in the reactor 100 may be discharged into the inside of the containment vessel 200 through the main valve 300. However, the safety locking auxiliary check valve 900 may prevent the cooling fluid in the reactor 100 from being discharged into the inside of the containment vessel 200 through the main valve 300 at an initial stage of an accident of the reactor 100 or a power failure of the nuclear equipment 1.

Meanwhile, as time elapses, a fluid level of cooling fluid in the containment vessel 200 may become higher than a fluid level of cooling fluid in the reactor 100. When the fluid level of the cooling fluid in the containment vessel 200 becomes higher than the fluid level of the cooling fluid in the reactor 100, the safety locking auxiliary check valve 900 may allow recirculation of the cooling fluid from the inside of the containment vessel 200 to the inside of the reactor 100 through the main valve 300. Accordingly, the cooling fluid may be naturally circulated between the inside of the reactor 100 and the inside of the containment vessel 200, and emergency core cooling of the reactor 100 may be achieved.

In addition, during depressurization of the reactor 100 for maintenance, repair, or refueling, the main valve 300 may be opened, and cooling fluid in the reactor 100 may be discharged into the inside of the containment vessel 200 through the main valve 300, and such discharge may be prevented by the safety locking auxiliary check valve 900.

Meanwhile, during normal operation of the reactor 100, when the trip valve 500 or the overpressure prevention valve 800 is unintentionally opened due to a mistake by an operator or the like, the main valve 300 needs not to be opened by the safety lock valve 600, but the main valve 300 may be opened due to maloperation of the safety lock valve 600 or the like. In other words, maloperation prevention by the safety lock valve 600 may not be properly performed. In this case, since the safety locking auxiliary check valve 900 may prevent the cooling fluid in the reactor 100 from being discharged into the inside of the containment vessel 200 through the main valve 300, maloperation prevention may be achievable.

The safety locking auxiliary check valve 900 may include a check valve support 910 and a check valve opening and closing member 920.

The check valve support 910 may be configured such that an inside thereof is communicated with the main valve opening and closing hole 313 of the main valve 300. For example, the check valve support 910 may be connected to the main valve body 310 of the main valve 300 such that the inside thereof is communicated with the main valve opening and closing hole 313. In the check valve support 910, a check valve opening and closing hole 911, which is communicated with an inside of the containment vessel 200, may be formed.

The check valve opening and closing member 920 may be rotatably disposed inside the check valve support 910 so that the check valve opening and closing hole 911 is opened and closed. The check valve opening and closing member 920 may be rotated by a flow of fluid in a direction from the inside of the reactor 100 to the inside of the containment vessel 200 when the main valve 300 is opened, so as to close the check valve opening and closing hole 911. In addition, the check valve opening and closing member 920 may be rotated by a flow of fluid in a direction from the inside of the containment vessel 200 to the inside of the reactor 100 when the main valve 300 is opened, so as to open the check valve opening and closing hole 911.

Meanwhile, in addition to such a configuration, according to a seventh embodiment of the present disclosure, a containment vessel communication hole 930 may be formed in the safety locking auxiliary check valve 900.

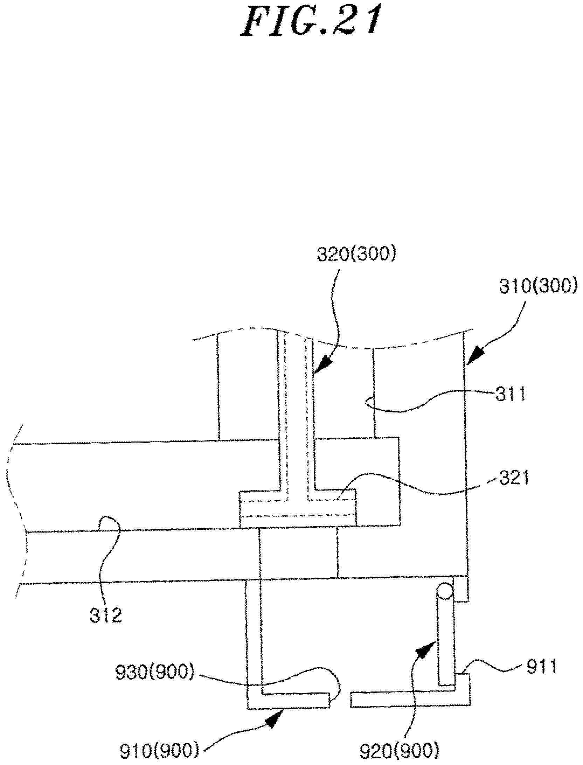

Hereinafter, the seventh embodiment will be described with reference to FIGS. 21 to 23. In describing the seventh embodiment of the present disclosure, compared to the above-described embodiment, a difference is that the containment vessel communication hole 930 is formed in the safety locking auxiliary check valve 900, and such a difference will be mainly described, and the same description and reference numerals will be applied from the above-described embodiments.

With reference to FIGS. 21 to 23, the containment vessel communication hole 930 may be formed in the safety locking auxiliary check valve 900 so as to allow a flow of fluid in a direction from the inside of the reactor 100 to the inside of the containment vessel 200, when the check valve opening and closing hole 911 is closed by the check valve opening and closing member 920.

Through the containment vessel communication hole 930, in the event of an accident in which the main valve 300 is erroneously opened, a small amount of working fluid of the main valve 300 may be discharged into the inside of the containment vessel 200. Although the working fluid of the main valve 300 is discharged in a small amount into the inside of the containment vessel 200 through the containment vessel communication hole 930, when other functions of the reactor 100 operate normally, an operator may recognize that the main valve 300 has maloperated. In addition, by the operator who recognized that the main valve 300 has maloperated closing the main valve 300, it may be possible to cope with an opening accident of the main valve 300 that may occur due to negligence or the like of the operator.

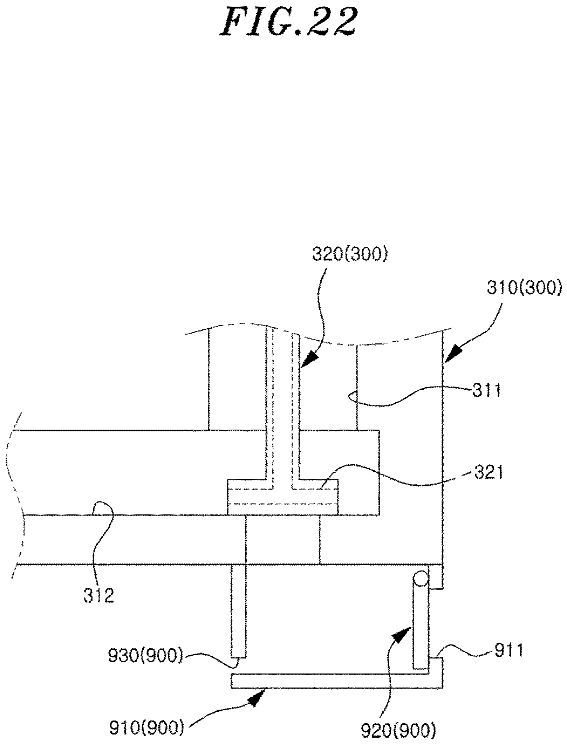

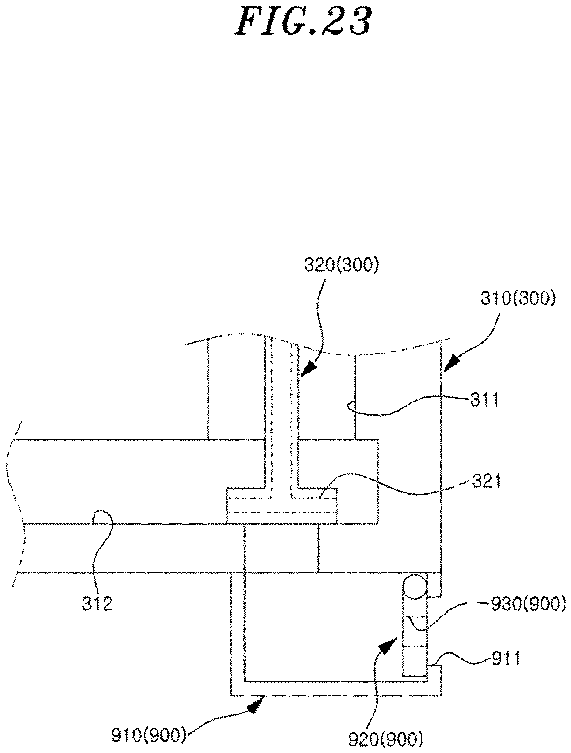

The containment vessel communication hole 930 may be formed in the check valve support 910, as illustrated in FIGS. 21 and 22, or in the check valve opening and closing member 920, as illustrated in FIG. 23. An amount of fluid that flows from the inside of the reactor 100 to the inside of the containment vessel 200 through the containment vessel communication hole 930 may be adjusted by changing a diameter or the like of the containment vessel communication hole 930.

Meanwhile, in addition to such a configuration, according to an eighth embodiment of the present disclosure, the check valve support 910, in which the check valve opening and closing hole 911 is formed, may be disposed in the reactor connection flow path 312 of the main valve 300 or in the reactor connection pipe 101, and the check valve opening and closing member 920 may be rotatably disposed in the reactor connection flow path 312 or the reactor connection pipe 101 to open and close the check valve opening and closing hole 911.

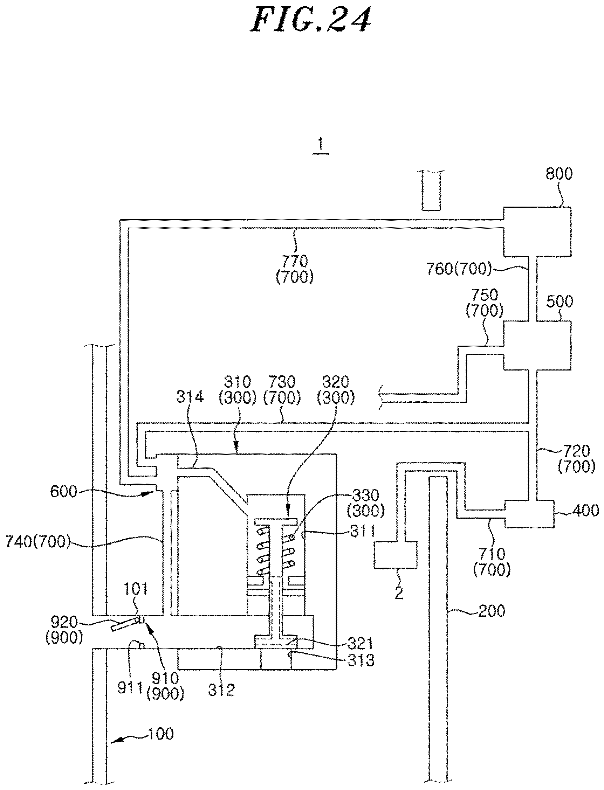

The eighth embodiment will be described with reference to FIG. 24. In describing the eighth embodiment of the present disclosure, compared to the above-described embodiment, a difference is that the check valve support 910, in which the check valve opening and closing hole 911 is formed, is disposed in the reactor connection flow path 312 of the main valve 300 or the reactor connection pipe 101, and the check valve opening and closing member 920 is rotatably disposed in the reactor connection flow path 312 or the reactor connection pipe 101 to open and close the check valve opening and closing hole 911, and such a difference will be mainly described, and the same description and reference numerals will be applied from the above-described embodiments.

With reference to FIG. 24, the check valve opening and closing hole 911 may be formed in the check valve support 910 of the safety locking auxiliary check valve 900. In addition, the check valve support 910 may be disposed in the reactor connection flow path 312 of the main valve 300 or in the reactor connection pipe 101.

In addition, the check valve opening and closing member 920 may be rotatably disposed in the reactor connection flow path 312 or the reactor connection pipe 101 to open and close the check valve opening and closing hole 911. The check valve opening and closing member 920 may be rotated by a flow of fluid in a direction from the inside of the reactor 100 to the inside of the containment vessel 200 when the main valve 300 is opened, so as to close the check valve opening and closing hole 911. In addition, the check valve opening and closing member 920 may be rotated by a flow of fluid in a direction from the inside of the containment vessel 200 to the inside of the reactor 100 when the main valve 300 is opened, so as to open the check valve opening and closing hole 911.

Meanwhile, in addition to such a configuration, according to a ninth embodiment of the present disclosure, a check valve flow path 912 may be formed in the check valve support 910 of the safety locking auxiliary check valve 900, the check valve opening and closing member 920 may open and close the check valve flow path 912, and the safety locking auxiliary check valve 900 may include a check valve elastic member 940 that elastically supports the check valve opening and closing member 920 in a direction for closing the check valve flow path 912.

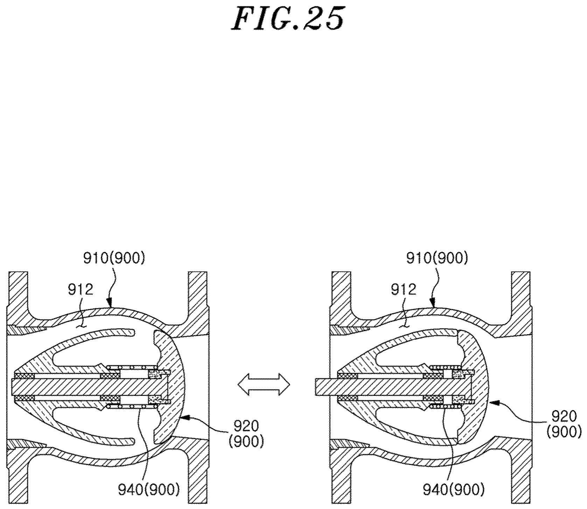

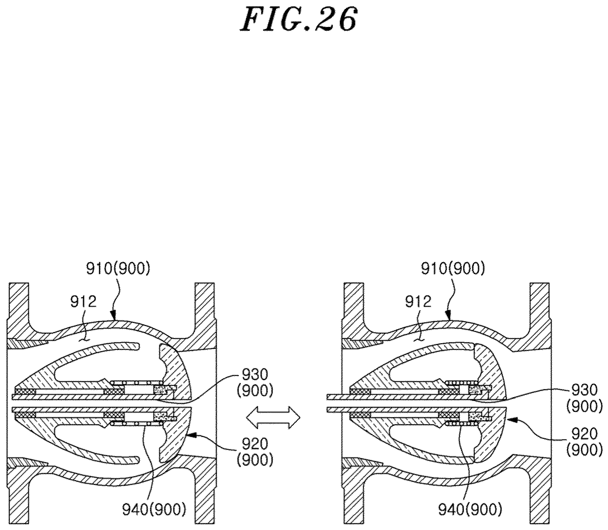

Hereinafter, the ninth embodiment will be described with reference to FIGS. 25 and 26. In describing the ninth embodiment of the present disclosure, compared to the above-described embodiments, a difference is that the check valve flow path 912 is formed in the check valve support 910 of the safety locking auxiliary check valve 900, the check valve opening and closing member 920 opens and closes the check valve flow path 912, and the safety locking auxiliary check valve 900 includes the check valve elastic member 940 that elastically supports the check valve opening and closing member 920 in a direction for closing the check valve flow path 912, and such a difference will be mainly described, and the same description and reference numerals will be applied from the above-described embodiments.

In other words, in the above-described sixth to eighth embodiments, the safety locking auxiliary check valve 900 is opened and closed by the rotation of the check valve opening and closing member 920 caused by a dynamic pressure of a working fluid, whereas in the ninth embodiment, the check valve opening and closing member 920 is moved by an elastic force of the check valve elastic member 940 and the dynamic pressure of the working fluid, so that the safety locking auxiliary check valve 900 is opened and closed, which is a difference.

With reference to FIGS. 25 and 26, the check valve flow path 912 may be formed in the check valve support 910 of the safety locking auxiliary check valve 900. The check valve flow path 912 may be connected to the main valve opening and closing hole 313 of the main valve 300 and may be communicated with an inside of the containment vessel 200. For example, one side of the check valve support 910 may be connected to the main valve body 310 of the main valve 300, so that one side of the check valve flow path 912 is connected to the main valve opening and closing hole 313, and another side is communicated with the inside of the containment vessel 200. In addition, the check valve flow path 912 may be connected to an inside of the reactor 100 and the reactor connection flow path 312 of the main valve 300. For example, one side of the check valve support 910 may be connected to the reactor 100 and another side may be connected to the main valve body 310 of the main valve 300, so that one side of the check valve flow path 912 is connected to the inside of the reactor 100, and the other side is connected to the reactor connection flow path 312.

The check valve opening and closing member 920 may be movably disposed in the check valve support 910 so as to open and close the check valve flow path 912.

In addition, the check valve elastic member 940 may elastically support the check valve opening and closing member 920 in a direction for closing the check valve flow path 912.

With reference to FIGS. 25 and 26, the safety locking auxiliary check valve 900 may be disposed to allow a flow of fluid in a direction from an inside of the containment vessel 200 to an inside of the reactor 100 when the main valve 300 is opened, but not allow a flow of fluid in a direction from the inside of the reactor 100 to the inside of the containment vessel 200. The check valve opening and closing member 920 may move in a direction for closing the check valve flow path 912 by an elastic force of the check valve elastic member 940. In addition, when a flow of fluid in a direction from the inside of the reactor 100 to the inside of the containment vessel 200 occurs, the check valve opening and closing member 920 may receive a force in the direction of closing the check valve flow path 912 due to an additional dynamic pressure of the working fluid.

Meanwhile, in the event of an accident of the reactor 100, when a fluid level of the cooling fluid in the containment vessel 200 becomes higher than a fluid level of the cooling fluid in the reactor 100, and a hydrostatic pressure due to a water pressure difference becomes greater than the elastic force of the check valve elastic member 940, the check valve opening and closing member 920 may be moved in a direction for opening the check valve flow path 912. When the check valve flow path 912 is opened by the check valve opening and closing member 920, the cooling fluid may flow from the inside of the containment vessel 200 to the inside of the reactor 100. In addition, the cooling fluid may be circulated between the inside of the containment vessel 200 and the inside of the reactor 100 in the direction from the inside of the containment vessel 200 to the inside of the reactor 100.

Meanwhile, with reference to FIG. 26, the containment vessel communication hole 930 may be formed in the check valve opening and closing member 920 to be communicated with the inside of the containment vessel. The containment vessel communication hole 930 may allow a flow of fluid in a direction from the inside of the reactor 100 to the inside of the containment vessel 200 when the check valve flow path 912 is closed by the check valve opening and closing member 920. An amount of fluid that flows from the inside of the reactor 100 to the inside of the containment vessel 200 through the containment vessel communication hole 930 may be adjusted by changing a diameter or the like of the containment vessel communication hole 930.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A safety lock valve, comprising:
a safety lock valve body in which a first flow communication hole, a second flow communication hole, and a pressure communication hole are formed;
a flow path switching portion including a switching flow path formed therein, and movably disposed inside the safety lock valve body to move between a first state in which the switching flow path is communicated with the first flow communication hole and the second flow communication hole, and a second state in which communication of the switching flow path with the first flow communication hole and the second flow communication hole is blocked; and
a flow path switching elastic member configured to provide an elastic force to the flow path switching portion in a direction in which the flow path switching portion moves to the first state,
wherein the pressure communication hole is formed such that a fluid that pressurizes the flow path switching portion in a direction in which the flow path switching portion moves to the second state is introduced into an inside of the safety lock valve body.

2. The safety lock valve of claim 1, wherein a flow path switching portion movement space, in which the flow path switching portion is movably disposed, is formed inside the safety lock valve body, and
wherein the flow path switching portion movement space includes a first pressure space communicated with the pressure communication hole and a second pressure space communicated with an outside of the safety lock valve body.

3. The safety lock valve of claim 2, wherein the safety lock valve body further includes:
an external communication hole formed therein that communicates the outside of the safety lock valve body with the second pressure space so that a fluid flows into or out of the second pressure space when a volume of the second pressure space changes.

4. The safety lock valve of claim 3, further comprising:
a flow path switching bellows disposed in the flow path switching portion movement space to be connected to the safety lock valve body and the flow path switching portion, and configured to block communication between the first pressure space and the second pressure space.

5. The safety lock valve of claim 4, wherein the flow path switching portion comprises:
a flow path switching member in which the switching flow path is formed; and
a movement driving member to which the flow path switching member and the flow path switching bellows are connected.

6. The safety lock valve of claim 5, wherein the flow path switching elastic member is disposed between the movement driving member and the safety lock valve body on a side of the external communication hole.

7. The safety lock valve of claim 6, wherein the flow path switching bellows is connected to the safety lock valve body on the side of the external communication hole such that an inside of the flow path switching bellows is communicated with the external communication hole,
the flow path switching elastic member is disposed inside the flow path switching bellows,
the first pressure space includes the flow path switching portion movement space outside the flow path switching bellows, and
the second pressure space includes the flow path switching portion movement space inside the flow path switching bellows.

8. The safety lock valve of claim 7, wherein the safety lock valve body further includes a body pressure balance flow path formed therein that communicates the first pressure space on one side of the flow path switching portion and the first pressure space on another side of the flow path switching portion with each other.

9. The safety lock valve of claim 6, wherein the flow path switching bellows is connected to the safety lock valve body and the movement driving member between the movement driving member and the flow path switching member,
the first pressure space includes the flow path switching portion movement space that is communicated with an inside of the flow path switching bellows and the pressure communication hole, and
the second pressure space includes the flow path switching portion movement space that is communicated with an outside of the flow path switching bellows and the external communication hole.

10. The safety lock valve of claim 9, wherein the flow path switching member includes a first member pressure balance flow path formed therein, which communicates the first pressure space on one side of the flow path switching member and the first pressure space on another side of the flow path switching member with each other, and
the movement driving member includes a second member pressure balance flow path formed therein, which communicates the second pressure space on one side of the movement driving member and the second pressure space on another side of the movement driving member with each other.

11. The safety lock valve of claim 3, wherein an overpressure prevention hole is further formed in the safety lock valve body.

12. The safety lock valve of claim 11, wherein the overpressure prevention hole is formed in the safety lock valve body to be communicated with the pressure communication hole.

13. The safety lock valve of claim 11, wherein the flow path switching portion further includes an overpressure prevention flow path formed therein, which is communicated with the overpressure prevention hole and the second flow communication hole in the second state.

14. A nuclear equipment, comprising:
a reactor;
a containment vessel in which the reactor is disposed;
a main valve disposed inside the containment vessel to be connected to an inside of the reactor, configured to be opened and closed such that the inside of the reactor and an inside of the containment vessel are either communicated or not communicated, and to be closed when a working fluid is supplied and to be opened when the working fluid is discharged;
a reset valve configured to be opened to supply the working fluid to the main valve;
a trip valve configured to be opened to discharge the working fluid from the main valve;
a safety lock valve, when the reset valve is opened, allowing the working fluid to flow to the main valve, and when the trip valve is opened, allowing the working fluid to be discharged from the main valve, and configured such that the main valve does not open when the trip valve is opened while the reactor is normally operated; and
a working fluid passage portion connected between two or more of the main valve, the reset valve, the trip valve, or the safety lock valve to allow the working fluid to flow,
wherein the safety lock valve is configured to be switched between a first state in which the working fluid is allowed to flow to the main valve or to be discharged from the main valve, and a second state in which the flow or discharge to or from the main valve of the working fluid is not allowed.

15. The nuclear equipment of claim 14, wherein the safety lock valve comprises:
a safety lock valve body in which a first flow communication hole connected to the reset valve and the trip valve, a second flow communication hole connected to the main valve, and a pressure communication hole connected to the inside of the reactor are formed;
a flow path switching portion including a switching flow path formed therein, and disposed inside the safety lock valve body so as to move between the first state in which the switching flow path is communicated with the first flow communication hole and the second flow communication hole, and the second state in which the communication of the switching flow path with the first flow communication hole and the second flow communication hole is blocked; and
a flow path switching elastic member configured to provide an elastic force to the flow path switching portion in a direction in which the flow path switching portion moves to the first state, and
wherein the flow path switching portion is configured such that a force due to a pressure difference between a pressure inside the reactor and a pressure inside the containment vessel is provided to the flow path switching portion in a direction in which the flow path switching portion moves to the second state.

16. The nuclear equipment of claim 14, further comprising:
an overpressure prevention valve configured to be opened together with the trip valve so that the working fluid is discharged from the main valve when the pressure inside the reactor is equal to or greater than a design pressure that is higher than a normal operation pressure, which is a pressure during a normal operation of the reactor.

17. The nuclear equipment of claim 14, further comprising:
a safety locking auxiliary check valve configured to allow a flow of fluid in a direction from the inside of the containment vessel to the inside of the reactor when the main valve is opened, but to prevent a flow of fluid in a direction from the inside of the reactor to the inside of the containment vessel.

18. The nuclear equipment of claim 17, wherein the safety locking auxiliary check valve is connected to the main valve, or connected to the inside of the reactor and the main valve, or is disposed in the main valve to be connected to the inside of the reactor, or is disposed in a reactor connection pipe that connects the inside of the reactor and the main valve.

19. The nuclear equipment of claim 17, wherein the main valve comprises:
a main valve body connected to the safety lock valve, and including a reactor connection flow path connected to the inside of the reactor, and a main valve opening and closing hole that is connected to the reactor connection flow path and communicated with the inside of the containment vessel; and
a main valve plunger movably disposed in the main valve body to open and close the main valve opening and closing hole.

20. The nuclear equipment of claim 19, wherein the safety locking auxiliary check valve comprises:
a check valve support configured such that an inside thereof is communicated with the main valve opening and closing hole, and in which a check valve opening and closing hole that is communicated with the inside of the containment vessel is formed; and
a check valve opening and closing member rotatably disposed inside the check valve support to open and close the check valve opening and closing hole.

21. The nuclear equipment of claim 20, wherein the safety locking auxiliary check valve includes a containment vessel communication hole that communicates with the inside of the containment vessel to allow a flow of fluid in a direction from the inside of the reactor to the inside of the containment vessel when the check valve opening and closing hole is closed by the check valve opening and closing member.

22. The nuclear equipment of claim 19, wherein the safety locking auxiliary check valve comprises:
a check valve support including a check valve opening and closing hole formed therein, and disposed in the reactor connection flow path or a reactor connection pipe that connects the inside of the reactor and the reactor connection flow path; and
a check valve opening and closing member rotatably disposed in the reactor connection flow path or the reactor connection pipe to open and close the check valve opening and closing hole.

23. The nuclear equipment of claim 19, wherein the safety locking auxiliary check valve comprises:
a check valve support including a check valve flow path, the check valve flow path being connected to the main valve opening and closing hole and communicated with the inside of the containment vessel, or connected to the inside of the reactor and the reactor connection flow path;
a check valve opening and closing member movably disposed in the check valve support to open and close the check valve flow path; and
a check valve elastic member configured to elastically support the check valve opening and closing member in a direction for closing the check valve flow path.

24. The nuclear equipment of claim 23, wherein the check valve opening and closing member includes a containment vessel communication hole configured to communicate with the inside of the containment vessel, wherein the containment vessel communication hole allows a flow of fluid in a direction from the inside of the reactor to the inside of the containment vessel when the check valve flow path is closed by the check valve opening and closing member.
